# EUROPÄISCHE PATENTSCHRIFT

(11) **EP 3 309 915 B1**
(45) Veröffentlichungstag und Bekanntmachung des Hinweises auf die Patenterteilung: **13.11.2019**
(21) Anmeldenummer: 16193973.1
(22) Anmeldetag: 14.10.2016
(51) Int. Cl.: H02G 1/12

(54) **ABISOLIERWERKZEUG, ABISOLIERMESSER UND VERFAHREN ZUM ABISOLIEREN**
STRIPPER, STRIPPING KNIFE AND METHOD FOR STRIPPING
PINCE À DÉNUDER, COUTEAU À DÉNUDER, ET PROCÉDÉ DE DÉNUDAGE

(43) Veröffentlichungstag der Anmeldung: 18.04.2018
(73) Patentinhaber: Wezag GmbH Werkzeugfabrik, 35260 Stadtallendorf (DE)
(72) Erfinder: Battenfeld, Kurt, 35085 Ebsdorfergrund/Wittelsberg (DE); Pontow, Gernot, 35279 Neustadt - Speckswinkel (DE)
(74) Vertreter: REHBERG HÜPPE + PARTNER

(56) Entgegenhaltungen:
- EP-A2- 1 258 960
- CN-A- 101 431 223
- DE-A1- 2 848 445
- DE-A1- 3 015 606
- DE-A1- 3 928 196
- DE-B4- 10 140 270
- JP-A- 2015 177 680

## Beschreibung

Die Erfindung betrifft ein Abisolierwerkzeug zum Abisolieren eines mehradrigen Kabels und ein Verfahren zum Abisolieren eines mehradrigen Kabels. Die Erfindung kann hierbei Einsatz finden im Zusammenhang mit einem Kabel beliebiger Querschnittsgeometrie. Beispielsweise kann das Kabel als Flach- oder Bandkabel ausgebildet sein. Vorzugsweise handelt es sich bei dem Kabel aber um ein Rundkabel. Das Kabel weist mehrere Adern auf. In dem Kabel sind die mehreren Adern gemeinsam von einer äußeren Isolierung ummantelt. Die Adern selbst verfügen jeweils über elektrische Leiter. Ein Leiter kann hierbei mit einem einzigen Draht oder mit mehreren Litzen gebildet sein kann. Des Weiteren die Adern jeweils über eine Isolierung, welche den zugeordneten elektrischen Leiter ummantelt. Hierbei kann die äußere Isolierung und/oder die Isolierung der Adern auch eine Schutzhülle und/oder Abschirmung aufweisen. Beispielsweise kann das mehradrige Kabel vier Adern aufweisen, wobei im Rahmen der Erfindung das Kabel auch über mehr oder weniger Adern verfügen kann.

Zur Herstellung des elektrischen Kontakts der elektrischen Leiter mit einem elektrischen Bauelement oder einem Stecker ist üblicherweise die Beseitigung eines Endes der äußeren Isolierung erforderlich, um die Adern zugänglich zu machen. Dann erfolgt eine Beseitigung der Enden der Isolierung der Adern, womit schließlich die elektrische Kontaktierung des Leiters in dem von der Isolierung befreiten Endbereich des Leiters, insbesondere mit einem Vercrimpen eines Steckers oder Kontaktelements mit diesem Endbereich, möglich ist.

Für das Abisolieren der Adern des Kabels kommen Abisolierwerkzeuge zum Einsatz. Unter einem Abisolierwerkzeug wird im Rahmen der Erfindung insbesondere eine Abisoliermaschine, ein Abisolierwerkzeug mit einem Antrieb (insbesondere einem pneumatischen, hydraulischen oder elektrischen Antrieb) oder ein manuell betriebenes Abisolier-Handwerkzeug subsumiert. Vorzugsweise handelt es sich bei dem Abisolierwerkzeug um eine Abisolierzange, welche über zwei manuell relativ zueinander verschwenkte Handhebel betätigt wird.

### STAND DER TECHNIK

Grundsätzlich möglich ist, dass mittels eines Abisolierwerkzeugs sukzessive ein Abisolieren der einzelnen Adern des Kabels erfolgt, was aber aufwendig ist und eine große Sorgfalt erfordert, wenn die Abisolierlänge für sämtliche Adern gleich sein soll.

DE 689 23 071 T2 offenbart eine Maschine, in welche ein dreiadriges Kabel mit in dem Endbereich beseitigter äußerer Isolierung eingelegt wird. Die drei Adern werden in einer Ebene parallel zueinander ausgerichtet und über eine pneumatisch betätigte Fixiereinrichtung fixiert. Die Isolierung der Adern wird zwischen zwei pneumatisch betätigten Abisoliermessern eingeschnitten. Zu diesem Zweck weisen die Abisoliermesser jeweils drei nebeneinander angeordnete Schneidenhälften auf. Nach dem pneumatisch verursachten Abziehen der derart eingeschnittenen Enden der Isolierungen der Adern erfolgt in der Maschine dann ein ebenfalls pneumatisch angetriebenes Vercrimpen der abisolierten Enden der Leiter der Adern mit Hülsenwerkstücken für elektrische Anschlüsse.

DE 10 2008 058 168 A1 offenbart eine Abisoliermaschine zum Abisolieren der Adern eines vieradrigen Kabels. Zwei Abisoliermesser, die über den Arbeitshub in parallelen Ebenen aneinander entlanggleiten und aufeinander zu bewegt werden, weisen jeweils W-förmige Stirnkonturen auf, wobei die W-förmigen Stirnkonturen entgegengesetzt zueinander orientiert sind. Die W-förmigen Stirnkonturen bilden jeweils zwei nebeneinander angeordnete V-förmige Schneidhälften aus. Paare der V-förmigen Schneidhälften der beiden W-förmigen Stirnkonturen bilden gemeinsam zwei rautenförmige Schneidkanten. Über den Arbeitshub verringert sich der Querschnitt der Rautenform, womit ein Einschneiden in eine Isolierung einer in der Schneidkante angeordneten Ader erfolgen kann. Für das Abisolieren des vieradrigen Kabels werden zunächst zwei Adern in die benachbarten rautenförmigen Schneidekanten eingelegt, womit das Einschneiden der Isolierungen der beiden Adern erfolgen kann und dann das Abisolieren dieser Adern erfolgen kann. Hieran anschließend werden die beiden anderen Adern in dieselben Schneidkante eingelegt, womit auch diese isoliert werden können. DE 10 2008 058 168 A1 offenbart auch das maschinelle Vercrimpen der isolierten Adern mit Steckern.

DE 30 15 606 A1 offenbart ein Abisolierwerkzeug zum Abisolieren eines ein- oder mehradrigen Kabels. Das Abisolierwerkzeug weist zu diesem Zweck vier gleichmäßig über den Umfang verteilte Abisoliermesser auf. Jedes der Abisoliermesser weist ein durchgehendes, bogenförmiges Schneidkantenviertel auf. Die Abisoliermesser bilden zwei Paare von Abisoliermessern, die um 90° versetzt zueinander angeordnet sind und in zwei aneinander angrenzenden Ebenen beweglich sind. Beim Betätigen des Abisolierwerkzeugs werden alle vier Abisoliermesser gleichmäßig in Richtung einer Längsachse eines zwischen die Abisoliermesser eingelegten Kabels bewegt, wodurch eine Isolierung des Kabels gleichmäßig von vier Seiten eingeschnitten wird. Im Falle eines mehradrigen Kabels wird nur eine gemeinsame Isolierung aller Adern eingeschnitten, während die zusätzlichen Isolierungen der einzelnen Adern durch die Abisoliermesser nicht beschädigt werden dürfen.

CN 101 431 223 A offenbart ein Abisolierwerkzeug zum Abisolieren einzelner Adern eines dreiadrigen Kabels, in dem die Adern in der Art eines Breitbandkabels nebeneinander angeordnet sind. Zu diesem Zweck weist das Abisolierwerkzeug zwei voneinander beabstandet angeordnete Paare von Abisoliermessern auf. Das erste Paar von Abisoliermessern ist so ausgebildet, dass es in die Isolierung der beiden äußeren Adern einschneiden kann, während die mittlere Ader unbeschädigt zwischen den beiden Abisoliermessern hindurchgeführt wird. Das zweite Paar von Ab¬iso¬lier¬messern, das dieselbe Schließrichtung aufweist wie das erste Paar von Abisoliermessern, weist dementsprechend an beiden Abisoliermessern jeweils nur eine Schneidkante auf, die die Isolierung der mittleren Ader einschneidet. Da die Isolierungen der Adern mit voneinander beabstandeten Paaren von Abisoliermessern eingeschnitten werden, ist der Übergang vom isolierten zum abisolierten Teil der Ader bei der mittleren Ader deutlich gegenüber dem Übergang vom isolierten zum abisolierten Teil bei den beiden außen liegenden Adern versetzt, was für vielen Anschlusssituationen unerwünscht ist.

DE 28 48 445 A1 offenbart eine über einen Motor angetriebene Abisoliermaschine zum Abisolieren eines Kabels. Die Abisoliermaschine weist vier gleichmäßig über den Umfang verteilte Abisoliermesser auf, die zwei um 90° versetzt angeordnete Paare bilden. Die Abisoliermesser weisen jeweils geradlinige und schräg orientierte Schneidkantenteile auf. Beim Betätigen des Abisolierwerkzeugs bewegen sich die Abisoliermesser blendenartig aufeinander zu, so dass die Schneidkantenteile in einem Teilumfangsbereich, welcher kleiner ist als ein Viertel des Gesamtumfangs, gleichmäßig eine Isolierung eines zwischen ihnen hindurch-geführten Kabels einschneiden. Durch die besondere blendenförmige Ausgestaltung soll ein gleichmäßiges Schneidverhalten für Kabel verschiedener Dicke erreicht werden. Es wird auch hier nur die äußere Isolierung des Kabels eingeschnitten, während individuelle Isolierungen von Adern eines mehradrigen Kabels nicht eingeschnitten werden.

Auch DE 39 28 196 A1 offenbart eine komplexe Abisoliermaschine mit mehreren Paaren von Abisoliermessern für das Abisolieren eines Kabels. Dabei kommt für das Abisolieren eines bestimmten Kabels jeweils nur ein Paar von Abisoliermessern zum Einsatz, wobei jedes der Abisoliermesser ein etwa V-förmiges Schneidkantenteil aufweist, so dass durch die beiden Abisoliermesser mit der Bewegung der beiden Schneidkantenteile aufeinander zu das Kabel nahezu vollständig in Umfangrichtung eingeschnitten werden kann. Die verschiedenen Paare von Abisoliermessern, die versetzt gegeneinander angeordnet sein können, haben verschieden ausgeformte Schneidkantenteile, so dass mittels des Abisolierwerkzeugs alternativ Kabel verschiedener Dicke abisoliert werden können. Es wird wiederum nur die äußere Isolierung des Kabels eingeschnitten, während individuelle Isolierungen von Adern eines mehradrigen Kabels nicht eingeschnitten werden dürfen.

Aus JP 2015 177680 A ist eine Vorrichtung zum Abisolieren eines mehradrigen Kabels bekannt. In dieser Vorrichtung wird die Isolierung der einzelnen Adern von Schneiden in Öffnungen von zwei aufeinanderliegenden Scheiben, die gegeneinander verdrehbar sind, eingeschnitten.

### AUFGABE DER ERFINDUNG

Der Erfindung liegt die Aufgabe zugrunde, ein alternatives oder verbessertes Abisolierwerkzeug vorzuschlagen, mit welchem ein gleichzeitiges Abisolieren mehrerer Adern eines mehradrigen Kabels möglich ist. Des Weiteren liegt der Erfindung die Aufgabe zugrunde, ein neues Verfahren zum Abisolieren eines mehradrigen Kabels vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der erfindungsgemäßen Ausgestaltung liegt insbesondere die Erkenntnis zugrunde, dass bei einem Abisolierwerkzeug, bei welchem ein Abisolieren von drei oder mehr Adern eines Kabels über zwei relativ zueinander bewegte Abisoliermesser erfolgt, die Schneidkantenhälften an den Abisoliermessern nebeneinander angeordnet werden müssen, was zur Folge hat, dass für ein Einschneiden der Isolierungen der Adern ebenfalls die Adern nebeneinander, vorzugsweise in einer Ebene, angeordnet sein müssen. Dies hat aber wiederum zur Folge, dass das Einschneiden der Isolierungen der Adern bei den weiter außenliegenden Adern bei einer anderen Längserstreckung der Ader erfolgt als bei einer innenliegend, insbesondere mittig angeordneten Ader. Grundsätzlich ist aber angestrebt, dass das Einschneiden der Isolierungen bei derselben Längserstreckung für sämtliche Adern erfolgt, woraus dann eine gewünschte gleiche Abisolierlänge resultiert. Möglich ist auch, dass die derartige Anordnung mehrerer Adern nebeneinander erfordert, dass die Adern in dem Austrittsbereich der Adern aus der äußeren Isolierung des Kabels verhältnismäßig weit auseinander gespreizt werden müssen, was große plastische Verformungen des Leiters in den Adern erfordert. Des Weiteren möglich ist, dass die derartige Anordnung mehrerer Adern nebeneinander erfordert, dass die äußere Isolierung über eine verhältnismäßig große Längserstreckung beseitigt werden muss, womit dann aber auch die nicht mehr von der äußeren Isolierung geschützten Abschnitte der Adern eine unerwünscht große Längserstreckung aufweisen.

Erfindungsgemäß wird vorgeschlagen, dass nicht lediglich ein Paar von Abisoliermessern zum Abisolieren des mehradrigen Kabels verwendet wird. Vielmehr weist das erfindungsgemäße Abisolierwerkzeug ein erstes Paar von Abisoliermessern auf. Die Abisoliermesser des ersten Paares werden über einen Arbeitshub des Abisolierwerkzeugs zum Einschneiden in eine Isolierung in einer ersten Ebene relativ zueinander in eine erste Schließrichtung bewegt. Des Weiteren weist das Abisolierwerkzeug ein zweites Paar von Abisoliermessern auf. Die Abisoliermesser des zweiten Paares werden ebenfalls über den Arbeitshub des Abisolierwerkzeugs zum Einschneiden in eine Isolierung in einer zweiten Ebene relativ zueinander in eine zweite Schließrichtung bewegt. Hierbei bilden die Abisoliermesser der beiden Paare jeweils mindestens vier Schneidkantenhälften für unterschiedliche Adern des Kabels aus, die sich zu zumindest vier Schneidkanten ergänzen. Um Kollisionen der beiden Paare von Abisoliermessern während des Arbeitshubs zu vermeiden, weichen die Ebenen, in welchen die beiden Paare von Abisoliermessern bewegt werden, hinsichtlich ihrer Position und/oder Orientierung voneinander ab. Vorzugsweise sind die Ebenen parallel zueinander orientiert. Andererseits weicht erfindungsgemäß die erste Schließrichtung von der zweiten Schließrichtung ab.

Die erfindungsgemäße Ausgestaltung soll (ohne Beschränkung hierauf) im Folgenden für das Abisolieren eines vieradrigen Kabels erläutert werden: In beiden Paaren von Abisoliermessern bilden die Stirnkonturen der Abisoliermesser jeweils zwei nebeneinander angeordnete Schneidkantenhälften ausbilden, wobei in der Schließstellung die zugeordneten Schneidkantenhälften der Paare der Abisoliermesser eine in Umfangsrichtung teilweise, weitestgehend oder vollständig geschlossene Schneidkante ausbilden, welche die Isolierung der darin angeordneten Ader einschneidet. Somit kann jedes Paar von Abisoliermessern genutzt werden, um zwei Adern des vieradrigen Kabels einzuschneiden. Dieses Einschneiden erfolgt in den unterschiedlichen (vorzugsweise parallelen) Ebenen durch die beiden Paare der Abisoliermesser. Die Adern, welche von einem Paar von Abisoliermessern nicht eingeschnitten werden sollen, sind hierbei an diesem Paar von Abisoliermessern vorbeigeführt oder durch dieses hindurchgeführt. Erfindungsgemäß kann also, beispielsweise abweichend zu der aus DE 10 2008 058 168 A1 bekannten Ausführungsform, nicht sukzessive ein Abisolieren von jeweils zwei Adern eines vieradrigen Kabels in zwei aufeinanderfolgenden Arbeitsschritten erfolgen, sondern simultan das Abisolieren sämtlicher Adern erfolgen.

Im Folgenden wird von einer parallelen Ausrichtung der Ebenen ausgegangen, ohne dass dieses zwingend der Fall ist. Im Rahmen der Erfindung kann der Abstand der beiden Ebenen, in welchen die Schneidkantenhälften der Paare der Abisoliermesser bewegt werden und geführt sind, beliebig sein. Möglich ist auch, dass ein Abisoliermesser nicht eben ausgebildet ist, sondern eine gekrümmte oder komplexe Geometrie aufweist. Der Abstand der parallelen Ebenen kann hierbei damit korrelieren, wie groß der Unterschied der Längserstreckungen, bei welchen die Schneidkantenhälften in die Isolierungen der Adern einschneiden, ist. Um lediglich einige wenige, nicht beschränkende Beispiele zu nennen, können die beiden Ebenen einen Abstand aufweisen, der kleiner ist als 10 mm, 5 mm, 1 mm, 0,5 mm, 0,2 mm oder sogar 0,1 mm.

Für einen besonderen Vorschlag der Erfindung sind die erste Ebene und die zweite Ebene unmittelbar benachbart zueinander angeordnet. Hierbei können die Abisoliermesser der Paare oder die zugeordneten Schneidkantenhälften der Paare der Abisoliermesser unmittelbar aneinander vorbeigeführt werden oder aneinander entlang gleiten. Möglich ist auch, dass die Abisoliermesser im Umgebungsbereich der Schneidkantenhälften so aufeinander zu gekröpft sind, dass sich ein minimaler Abstand der Schneidkantenhälften der unterschiedlichen Paare der Abisoliermesser ergibt. Möglich ist des Weiteren, dass die Ebenen einen minimalen Abstand voneinander aufweisen, wenn die Abisoliermesser der beiden Paare Schneidkantenhälften ausbilden, welche lediglich einseitig gefast sind mit Anordnung der einseitigen Fase auf der Seite der Schneidekantenhälfte, welche den Abisoliermessern des anderen Paares abgewandt ist. Mit der erfindungsgemäßen Anordnung der ersten Ebene und zweiten Ebene unmittelbar benachbart zueinander kann ein Abisolieren der Adern trotz Verwendung der zwei Paare von Abisoliermessern mit den gleichen oder nahezu den gleichen Abisolierlängen erfolgen.

Durchaus möglich ist, dass die Adern des Kabels, welche nicht von einem ersten Paar von Abisoliermessern bearbeitet werden sollen, sondern von dem anderen, zweiten Paar der Abisoliermesser, an dem ersten Paar der Abisoliermesser seitlich vorbeigeführt sind. Für einen besonderen Vorschlag der Erfindung weist mindestens ein Abisoliermesser eine randoffene Ausnehmung auf. In diesem Fall kann eine nicht von den Abisoliermessern dieses Paares bearbeitete Ader durch die randoffene Ausnehmung hindurchtreten und dann von dem anderen Paar der Abisoliermesser bearbeitet werden. Vorzugsweise ist die mindestens eine von einem Paar ausgebildete Schneidkante über den gesamten Arbeitshub des Abisolierwerkzeugs hinter der randoffenen Ausnehmung des Abisoliermessers des anderen Paares angeordnet.

Für die Betätigung der Abisoliermesser gibt es vielfältige Möglichkeiten, wobei hier grundsätzlich sämtliche aus dem Stand der Technik zu Abisolierwerkzeugen, insbesondere Abisolierzangen, bekannten Antriebsmechanismen zur Erzeugung einer Antriebbewegung Einsatz finden können. Für einen Vorschlag der Erfindung weist das Abisolierwerkzeug ein Betätigungselement auf, welches (über einen beliebigen Antriebsmechanismus) über den Arbeitshub des Abisolierwerkzeugs bewegt wird. Des Weiteren weisen Abisoliermesser Gegen-Betätigungsflächen auf, die an Betätigungsflächen des Betätigungselements anliegen. Über den Kontakt zwischen den Betätigungsflächen und den Gegen-Betätigungsflächen erfolgt dann die Übertragung der Antriebskräfte und Antriebsbewegungen auf die Abisoliermesser. Hierzu wird mittels des Antriebsmechanismus das Betätigungselement gegenüber einem Werkzeugkopf über den Arbeitshub in eine Betätigungsrichtung bewegt. Das Betätigungselement bildet gegenüber der Betätigungsrichtung geneigte Betätigungsflächen aus. Die Neigung der Betätigungsflächen bestimmt somit, in welchem Ausmaß die Betätigung des Betätigungselements in die Betätigungsrichtung zu einer Verschiebung der Gegen-Betätigungsfläche und damit Bewegung des zugeordneten Abisoliermessers führt. Über die Neigung der Betätigungsfläche kann auch eine Übersetzung der Antriebskraft des Betätigungselements zu einer Antriebskraft des Abisoliermessers erfolgen. Hierbei kann die Betätigungsfläche eine konstante Neigung aufweisen. Ebenfalls möglich ist, dass die Betätigungsfläche gekrümmt ausgebildet ist, so dass diese eine sich verändernde Neigung mit einer sich damit auch verändernden Übertragungscharakteristik zwischen Betätigungselement und Abisoliermesser aufweist.

Für die Gestaltung und den mindestens einen Freiheitsgrad des Betätigungselements gibt es vielfältige Möglichkeiten. Für einen Vorschlag der Erfindung ist das Betätigungselement ein Betätigungsring. In diesem Fall kann die Betätigungsrichtung eine Umfangsrichtung des Betätigungsrings sein, in die die Betätigungsflächen des Betätigungsrings über den Arbeitshub verdreht werden. In diesem Fall sind die Betätigungsflächen gegenüber der Umfangsrichtung geneigt. Hierbei können die Betätigungsflächen Innenflächen des Betätigungsrings sein, welche somit nicht zylindersegmentförmig entsprechend einem konstanten Innenradius des Betätigungsrings ausgebildet sind, sondern gegenüber einer zylindersegmentförmigen Fläche gekrümmt oder geneigt sind. Mittels des Einsatzes eines Betätigungsrings kann unter Umständen auf besonders einfache Weise eine gleichzeitige und synchronisierte Betätigung mehrerer Abisoliermesser erfolgen, welche dann radial innenliegend von dem Betätigungsring angeordnet sein können und gleichmäßig in Umfangsrichtung verteilt sein können.

Für einen alternativen Vorschlag der Erfindung weist das Betätigungselement (mindestens) einen Betätigungskeil auf. In diesem Fall kann die Betätigungsrichtung des Betätigungselements eine (insbesondere translatorische) Verschieberichtung des Betätigungskeils sein. Eine Keilfläche des Betätigungskeils, die dann eine Betätigungsfläche ausbildet, ist in diesem Fall gegenüber der Verschieberichtung geneigt. Möglich ist durchaus, dass ein Betätigungselement zwei oder mehr derartige Keile aufweist oder Betätigungskeile einer Art Prisma ausbilden. So kann beispielsweise das Betätigungselement zwei Betätigungskeile mit V-förmig auseinanderlaufenden Keilflächen ausbilden. Am Zangenkopf sind dann weitere Betätigungskeile fixiert, deren Keilflächen V-förmig in Richtung der Öffnung des V der Betätigungsflächen des Betätigungselements geöffnet sind. Die beiden V-förmigen Keilflächen bilden dann eine Art Parallelogramm. Mit der Bewegung des Betätigungselements in die Verschieberichtung verringert sich der Abstand gegenüberliegender Seiten des Querschnitt des Parallelogramms, womit die von den Seiten und somit den Keilflächen gebildeten Betätigungsflächen nach innen wandern und eine Betätigung der Abisoliermesser über die Gegen-Betätigungsflächen nach innen mit einem damit einhergehenden Einschneiden der jeweiligen Isolierungen erfolgen kann.

Durchaus möglich ist, dass die Adern des Kabels frei in das Abisolierwerkzeug eingeführt werden. Für einen weiteren Vorschlag der Erfindung sind Aufnahmen für sämtliche, zumindest zwei, vorzugsweise vier Adern des Kabels an dem Abisolierwerkzeug vorgesehen. Eine derartige Aufnahme kann eine Einführschräge aufweisen, um die Adern in die richtige Ausrichtung und/oder Position zu bringen. Des Weiteren kann die Aufnahme die Ader zumindest teilweise in dem Werkzeugkopf des Abisolierwerkzeugs fixieren, was durch Ausbildung eines kleinen Spiels, einer gewissen Reibung oder einer zusätzlichen manuell betätigten Fixiereinrichtung erfolgen kann. Vorzugsweise sind die Aufnahmen exakt zu den Schneidkanten der beiden Paare der Abisoliermesser des Abisolierwerkzeugs ausgerichtet und vor und/oder hinter diesen angeordnet. Für den Fall, dass die Schneidkanten auf dem Umfang eines Kreises (gleichmäßig oder ungleichmäßig) verteilt sind, können die Aufnahmen entsprechend angeordnet sein.

Möglich ist, dass auch das Einschieben der Adern des Kabels in die Aufnahmen frei und unbegrenzt erfolgt, so dass der Benutzer mit dem Einschieben der Adern des Kabels in die Aufnahmen vorgeben kann, welche Abisolierlänge herbeigeführt wird. Möglich ist aber gemäß einer Ausführungsform der Erfindung, dass die Aufnahmen Anschläge für die Vorgabe der Einlegetiefe der Adern und damit der Abisolierlänge aufweisen. Hierbei können die Anschläge eine feste Einlegetiefe der Adern vorgeben. Möglich ist aber durchaus auch, dass die Einlegetiefe der Adern durch eine Verstellung der Anschläge (stufenlos oder in Stufen) veränderbar ist. Hierbei können die Anschläge für die einzelnen Adern von einzelnen Anschlagkörpern oder einem gemeinsamen Anschlagkörper ausgebildet sein.

Wird das Kabel mit den abisolierten Adern nach dem Durchlaufen des Arbeitshubs aus dem Abisolierwerkzeug herausgezogen, verbleiben die abgetrennten Enden der Isolierungen der Adern, welche von den Abisoliermessern in deren Schließstellungen zurückgehalten werden, zunächst in dem Werkzeugkopf. Möglich ist, dass die Enden der Isolierung beispielsweise manuell aus dem Werkzeugkopf und den Aufnahmen entfernt werden oder der Werkzeugkopf so verdreht wird, dass die Enden der Isolierungen infolge ihres Eigengewichts, ggf. unterstützt durch ein Klopfen oder Schütteln, aus dem Werkzeugkopf und den Aufnahmen herausfallen.

Für ein erfindungsgemäßes Abisolierwerkzeug weist dieses einen Auswerfer auf. Über den Auswerfer kann mindestens ein mit dem Abisolierwerkzeug über den Arbeitshub abgetrenntes Ende einer Isolierung einer Ader aus dem Abisolierwerkzeug und der Aufnahme ausgeworfen werden.

Vorzugsweise erfolgt über den Auswerfer das simultane Auswerfen sämtlicher abgetrennter Enden der Isolierungen der Adern.

Durchaus möglich ist, dass ein Abisolierwerkzeug einerseits Anschläge für die Vorgabe der Einlegetiefe der Adern und andererseits einen separat von diesen Anschlägen ausgebildeten Auswerfer aufweist. Eine besonders kompakte Ausgestaltung eines erfindungsgemäßen Abisolierwerkzeugs kann sich ergeben, wenn der Auswerfer zum Auswerfen mindestens eines mit dem Abisolierwerkzeug über den Arbeitshub abgetrennten Endes einer Isolierung einer Ader den Anschlag für die Vorgabe der Einlegetiefe der Adern bewegt. Damit ist der Anschlag multifunktional, indem dieser einerseits die Einlegetiefe vorgibt und andererseits zum Ausschieben des abgetrennten Endes der Isolierung dient.

Ein im Rahmen der Erfindung einsetzbares Abisoliermesser weist zwei Schneidkantenhälften auf, über welche ein gleichzeitiges Einschneiden in Isolierungen von zwei Adern eines Kabels erfolgen kann. Zwischen den Schneidkantenhälften weist das Abisoliermesser eine randoffene, beispielsweise in einem Längsschnitt U-förmige Ausnehmung auf. Durch diese randoffene Ausnehmung kann eine Ader des Kabels, die nicht von diesem Abisoliermesser bearbeitet und insbesondere eingeschnitten werden soll, hindurchtreten und in einer parallelen Ebene von einem Abisoliermesser eines anderen Paares von Abisoliermessern bearbeitet werden. Vorzugsweise werden sowohl die beiden Schneidkantenhälften als auch die dazwischen angeordnete randoffene Ausnehmung von einer Stirnkontur des Abisoliermessers ausgebildet. Möglich ist hierbei, dass die Öffnung der randoffenen Ausnehmung und die Öffnungen der beiden Schneidkantenhälften in einer Ebene der Stirnkontur angeordnet sind. Möglich ist des Weiteren, dass sich die randoffene Ausnehmung tiefer in das Abisoliermesser erstreckt als die beiden Schneidkantenhälften.

Für die weitere Ausgestaltung des Abisoliermessers gibt es vielfältige Möglichkeiten. Für einen Vorschlag der Erfindung weist das Abisoliermesser eine Gegen-Betätigungsfläche auf, über welche das Abisoliermesser mit einer Betätigungsfläche eines Betätigungselements des Abisolierwerkzeugs in Wirkverbindung treten kann und von dieser während des Arbeitshubs bewegt werden kann und mit einer Kraft zum Einschneiden in die Isolierung beaufschlagt werden kann. Alternativ oder zusätzlich möglich ist, dass das Abisoliermesser eine Abstützfläche aufweist, an welcher ein Federfußpunkt einer Rückstellfeder abgestützt ist. Hierbei kann die Rückstellfeder dazu dienen, nach dem Durchlaufen des Arbeitshubs das Abisoliermesser wieder von der Ader des Kabels weg zu bewegen.

Eine weitere Lösung der der Erfindung zugrunde liegenden Aufgabe ist gegeben durch ein Verfahren zum Abisolieren eines Kabels, welches zumindest vier Adern aufweist, die jeweils mit einer Isolierung ausgestattet sind. Bei einem derartigen Verfahren erfolgt zunächst das Einlegen von mindestens vier Adern in mindestens eine Aufnahme eines Abisolierwerkzeugs (vorzugsweise in eine Aufnahme für jede Ader). Hieran anschließend wird der Arbeitshub des Abisolierwerkzeugs durchlaufen. Während des Arbeitshubs erfolgt eine Bewegung eines ersten Paares von Abisoliermessern. Während dieser Bewegung erfolgt ein Einschneiden des ersten Paares der Abisoliermesser in Isolierungen von zwei ersten Adern des Kabels. Gleichzeitig erfolgt eine relative Bewegung eines zweiten Paares von Abisoliermessern über den Arbeitshub des Abisolierwerkzeugs mit einem Einschneiden des zweiten Paares der Abisoliermesser in Isolierungen von zwei anderen, zweiten Adern des Kabels. Hierbei werden die beiden Paare der Abisoliermesser über den Arbeitshub in parallelen Ebenen bewegt.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Abisoliermesser oder einer Schneidkantenhälfte die Rede ist, ist dies so zu verstehen, dass genau ein Abisoliermesser oder eine Schneidkantenhälfte, zwei Abisoliermesser oder Schneidkantenhälften oder mehr Abisoliermesser oder Schneidkantenhälften vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht ein vieradriges Kabel mit beseitigtem Ende einer äußeren Isolierung und endseitig mit einem erfindungsgemäßen Abisolierwerkzeug abisolierten Adern.
- **Fig. 2**: zeigt in einer Vorderansicht ein als Abisolierzange ausgebildetes Abisolierwerkzeug.
- **Fig. 3**: zeigt einen Zangenkopf einer Abisolierzange gemäß Fig. 2 in einer Vorderansicht.
- **Fig. 4**: zeigt eine räumliche Explosionsdarstellung des Zangenkopfes gemäß Fig. 3.
- **Fig. 5**: zeigt in einer räumlichen Ansicht eine Deckplatte eines Zangenkopfes gemäß Fig. 3 und 4 mit hieran ausgebildeten Führungsflächen für die Paare der Abisoliermesser und den Betätigungsring.
- **Fig. 6**: zeigt ein erstes Paar von Abisoliermessern in einer Öffnungsstellung.
- **Fig. 7**: zeigt das erste Paar von Abisoliermessern gemäß Fig. 6 in einer Schließstellung.
- **Fig. 8**: zeigt ein zweites Paar von Abisoliermessern in einer Öffnungsstellung.
- **Fig. 9**: zeigt das zweite Paar von Abisoliermessern gemäß Fig. 8 in einer Schließstellung.
- **Fig. 10**: zeigt die beiden Paare der Abisoliermesser gemäß Fig. 6 und 8 in der Öffnungsstellung bei Blickrichtung in Betätigungsrichtung des ersten Paares der Abisoliermesser.
- **Fig. 11**: zeigt in einer Vorderansicht einen Zangenkopf gemäß Fig. 3 bis 5 mit demontierter Deckplatte in einer Öffnungsstellung der Abisoliermesser.
- **Fig. 12**: zeigt den Zangenkopf gemäß Fig. 3 bis 5 in einer Fig. 11 entsprechenden Darstellung, wobei sich hier aber die Abisoliermesser in einer Schließstellung befinden.
- **Fig. 13**: zeigt den Zangenkopf gemäß Fig. 3 bis 5 und Fig. 11 und 12 in einem Längsschnitt mit einem Auswerfer zum Auswerfen abisolierter Enden von Isolierungen der Adern.
- **Fig. 14**: zeigt in einer räumlichen Explosionsdarstellung eine alternative Ausgestaltung eines Zangenkopfes.
- **Fig. 15**: zeigt Paare von Abisoliermessern des Zangenkopfes gemäß Fig. 14.
- **Fig. 16**: zeigt stark schematisiert ein Verfahren zum Abisolieren eines mehradrigen Kabels.

### FIGURENBESCHREIBUNG

Sind im Folgenden identische Bauteile oder hinsichtlich der Geometrie und/oder Funktion ähnliche Bauteile vorhanden, wird teilweise im Folgenden für die Bauteile dasselbe Bezugszeichen verwendet, wobei dann die einzelnen Bauteile durch Hinzufügung des Buchstabens a, b, c... gekennzeichnet sind. In diesem Fall kann dann auch auf einzelne, auf einen Teil der oder auf sämtliche Bauteile Bezug genommen werden, indem das Bezugszeichen ohne ergänzenden Buchstaben verwendet wird. Bei der Erläuterung der weiteren Gestaltung von Bauteilen, die mit demselben Bezugszeichen gekennzeichnet sind, in den Zeichnungen und in der Beschreibung wird teilweise lediglich Bezug auf eines dieser Bauteile genommen, welches dann mit oder ohne den zusätzlichen Buchstaben gekennzeichnet sein kann.

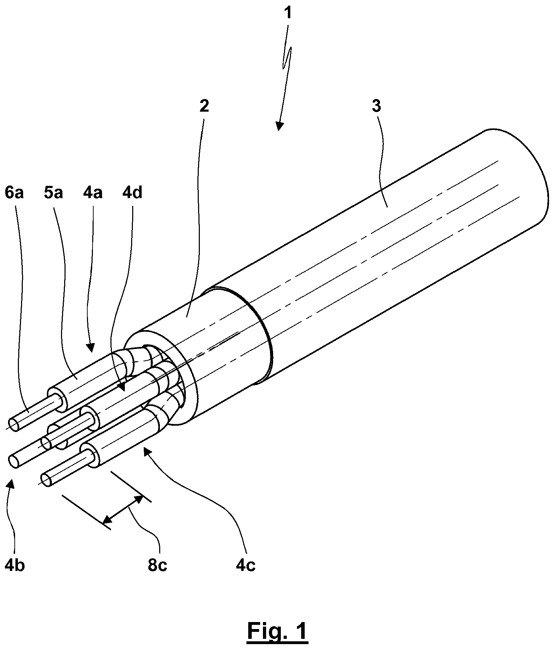

**Fig. 1** zeigt ein mehradriges Kabel 1, welches hier als Rundkabel ausgebildet ist. Das Kabel 1 verfügt über eine äußere Isolierung 2 mit einer Schutzhülle 3. In der äußeren Isolierung 2 sind vier Adern 4a, 4b, 4c, 4d des mehradrigen Kabels 1 aufgenommen. Die Adern 4 weisen jeweils eine Isolierung 5 auf, die einen Leiter 6 ummantelt, der ein einziger Draht sein kann oder mit mehreren Litzen gebildet sein kann. Durch Beseitigung eines Endes der äußeren Isolierung 2 sind die Enden der Adern 4 freigelegt. Durch Bearbeitung der Adern 4 mit einem erfindungsgemäßen Abisolierwerkzeug 7 sind die Leiter 6 der Adern 4 über eine Abisolierlänge 8 freigelegt. Für die Bearbeitung mit dem Abisolierwerkzeug 7 und/oder für die Verbindung der Adern 4 mit einem elektrischen Bauelement oder einem Stecker können die Adern 4 im Austrittsbereich aus der äußeren Isolierung 2 des Kabels 1 wie dargestellt geringfügig auseinander gespreizt sein, wobei aber die abisolierten Endbereiche der Leiter 6 wieder parallel zueinander orientiert sind.

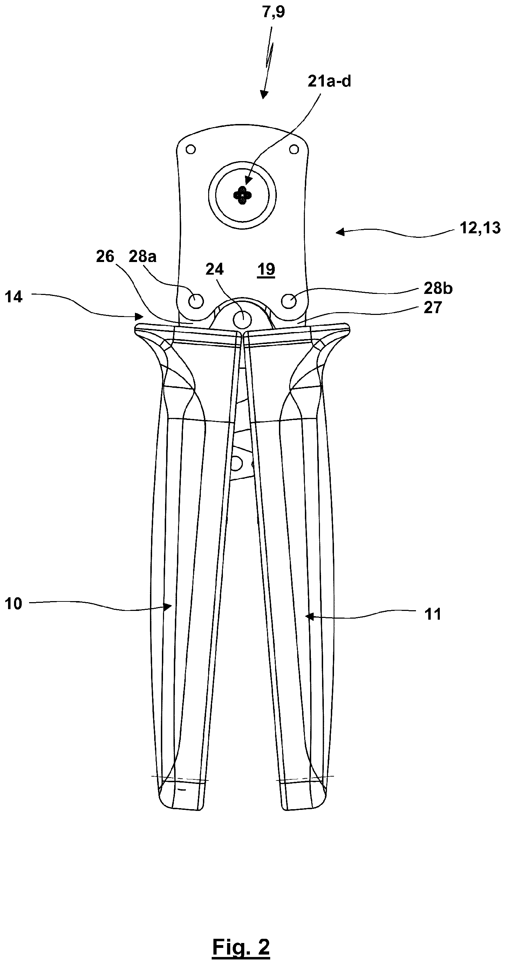

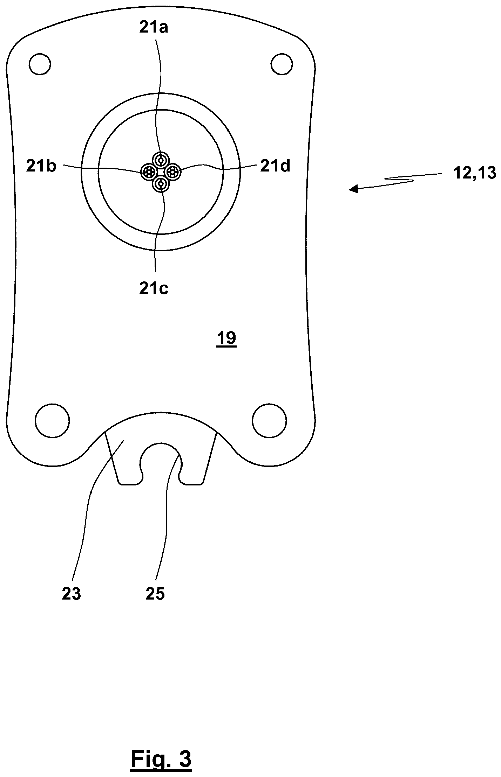

**Fig. 2** zeigt ein als Abisolierzange 9 ausgebildetes Abisolierwerkzeug 7. Die Abisolierzange 9 verfügt über zwei Handhebel 10, 11, die manuell von dem Benutzer betätigt werden können, und einen als Zangenkopf 12 ausgebildeten Werkzeugkopf 13. Die Handhebel 10, 11 sind über einen Antriebsmechanismus 14 mit Abisoliermessern 15, 16, 17, 18 derart gekoppelt, dass die Betätigung der Handhebel 10, 11 mit einer Verschwenkung derselben relativ zueinander und aufeinander zu eine gemeinsame Bewegung der Abisoliermesser 15, 16, 17, 18 von einer Öffnungsstellung in eine Schließstellung zur Folge hat. Der Zangenkopf 12 weist Deckplatten 19, 20 auf. Die Deckplatten 19, 20 bilden jeweils Aufnahmen 21, 22 für die Aufnahme der Adern 4 des Kabels 1 aus (vgl. auch die Ansicht des Zangenkopfes 12 gemäß **Fig. 3**)**.** Vorzugsweise sind die Aufnahmen 21, 22 jeweils mit Bohrungen ausgebildet, deren Durchmesser geringfügig größer ist als der Durchmesser der Adern 4. Eingangsseitig können die die Aufnahmen 21, 22 bildenden Bohrungen eine Einführfase aufweisen.

Für den in der Abisolierzange 9 eingesetzten Antriebsmechanismus 14 sind sämtliche aus dem Stand der Technik bekannte Antriebsmechanismen einsetzbar, wobei beispielsweise sowohl ein Antriebsmechanismus Einsatz finden kann, bei welchem ein Handhebel 11 fest mit dem Zangenkopf 12 verbunden ist, während der andere Handhebel 10 verschwenkbar ist, als auch ein Antriebsmechanismus verwendet werden, bei welchem beide Handhebel 10, 11 relativ zu dem Zangenkopf 12 verschwenkt werden. Für das hier gewählte Ausführungsbeispiel kommt ein Antriebsmechanismus 14 zum Einsatz, bei welchem über den Antriebsmechanismus 14 ein Stempel 23 über den Arbeitshub in eine Längsrichtung der Abisolierzange 9 translatorisch bewegt wird. Geeignete Antriebsmechanismen 14 für die Bewegung des Stempels 23 über den Arbeitshub infolge der Betätigung durch die Handhebel 10, 11 sind insbesondere aus den Druckschriften DE 40 23 337 C1, DE 44 27 553 C2, DE 198 32 884 C1, DE 100 56 900 C1, DE 101 32 413 C2, DE 101 40 270 B4 und DE 10 2007 038 626 B3 bekannt, welche hinsichtlich des Antriebsmechanismus 14 zum Antrieb eines Stempels 23 über die Betätigung der Handhebel 11, 12 zum Gegenstand der vorliegenden Patentanmeldung gemacht werden. Insbesondere basieren diese Antriebsmechanismen 14 darauf, dass die Handhebel 10, 11 in ihren Endbereichen verschwenkbar über einen Druckbolzen 24 miteinander verbunden sind. Der Druckbolzen 24 stützt sich in einer Aufnahme 25 des Stempels 23 ab. Beidseits der Kopplung des Druckbolzens 24 mit dem Stempel 23 erstrecken sich Zuglaschen 26, 27. Die Zuglaschen 26, 27 sind jeweils in einem Endbereich über Bolzen 28a, 28b verschwenkbar an dem Zangenkopf 12 gehalten und in dem anderen Endbereich verschwenkbar, beabstandet von dem Druckbolzen 24 an den Handhebeln 10, 11 angelenkt.

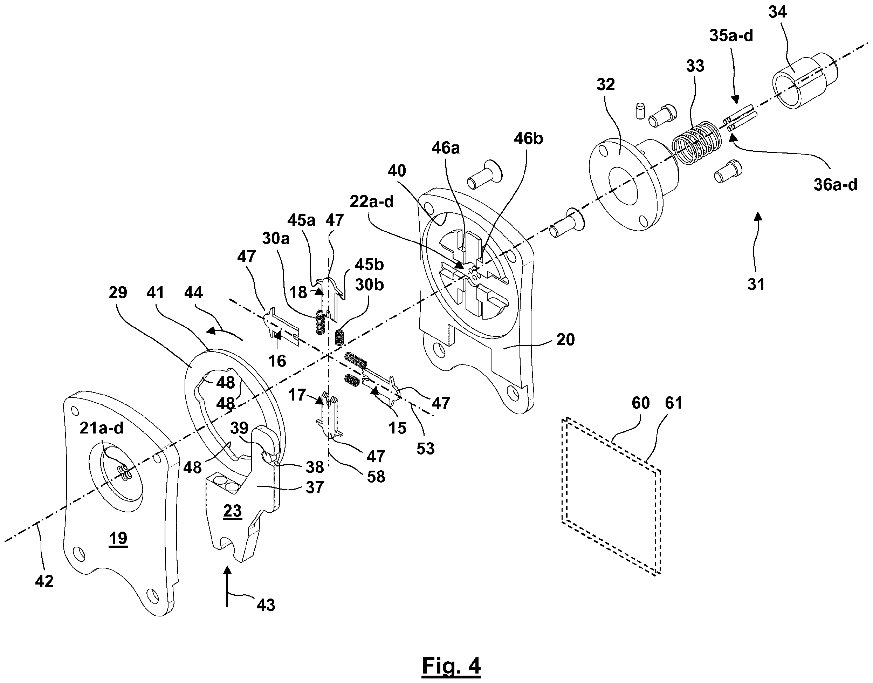

**Fig. 4** zeigt eine Explosionsdarstellung des Zangenkopfes 12 der Abisolierzange 9. Der Zangenkopf 12 weist zwischen den Deckplatten 19, 20 den Stempel 23, einen Betätigungsring 29 und die Abisoliermesser 15, 16, 17, 18 mit zugeordneten Rückstellfedern 30 auf. An der Außenseite der Deckplatte 20 ist ein Auswerfer 31 befestigt.

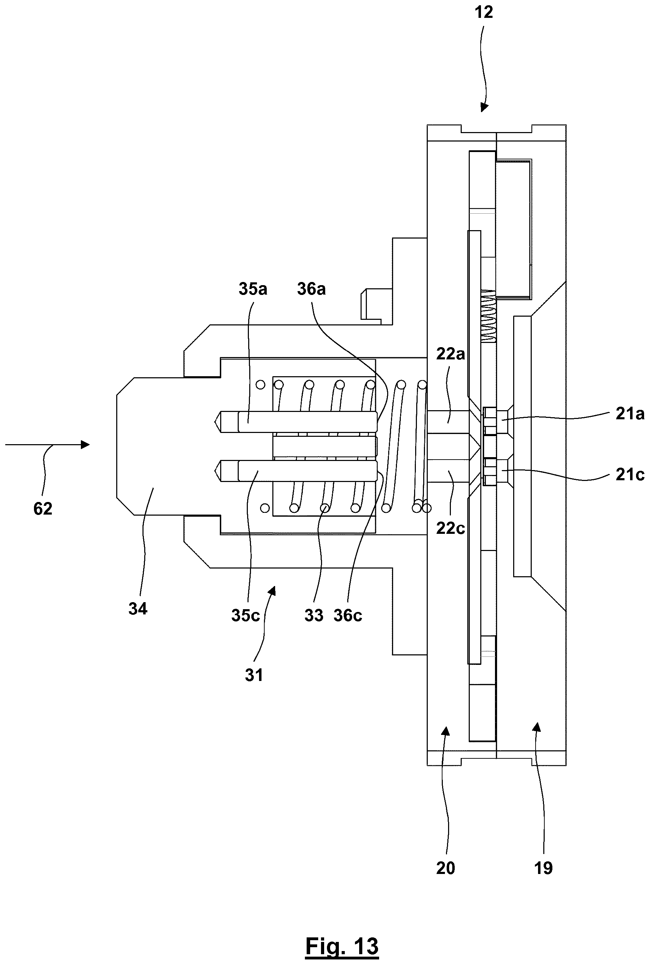

Der Auswerfer 31 weist ein Gehäuse 32 auf. In dem Gehäuse 32 ist begrenzt axial unter Beaufschlagung einer Druckfeder 33 ein Betätigungsknopf 34 verschieblich. Der Betätigungsknopf 34 weist innenliegend in dem Gehäuse 32 eine Sacklochbohrung auf, an oder in deren Boden vier Stifte 35a-35d abgestützt sind (vgl. auch Fig. 13). Die Stifte 35a-d sind koaxial zu den Aufnahmen 22a-d angeordnet. Die Durchmesser der Stifte 35a-d bilden eine Spielpassung mit den Aufnahmen 22a-d aus. Mit Betätigung des Betätigungsknopfes 34 werden die Stifte 35a-d durch die Aufnahmen 22a-d geschoben, womit nach dem Abisolieren in den Aufnahmen 22a-d verbliebene Enden der Isolierungen 5a-d der Adern 4a-d ausgeworfen werden können. Da die Stifte 35a-d für nicht betätigten Betätigungsknopf 34 hinter den Aufnahmen 22a-d angeordnet sind, bilden die Stirnseiten der Stifte 35a-d jeweils einen Anschlag 36a-36d. Die Anschläge 36a-d geben vor, wie weit die Adern 4a-d durch die Aufnahmen 21, das Innere des Zangenkopfes 12 und die Aufnahmen 22a-d geführt werden können, womit eine Vorgabe der Abisolierlänge 8 erfolgt.

Der Stempel 23 weist einen Mitnehmerarm 37 auf. In eine Aufnahme 38 des Mitnehmerarms 37 greift ein Mitnehmer 39 (hier ein Zapfen) des Betätigungsrings 29 ein.

Die Deckplatten 19, 20 weisen auf den einander zugewandten Seiten Ausfräsungen auf. Die Ausfräsungen bilden hierbei eine zylindrische Führungsfläche 40 aus, an welcher eine zylindrische Mantelfläche 41 des Betätigungsrings 29 für eine Rotation um eine Rotationsachse 42 geführt ist. Die Rotationsachse 42 ist hierbei vertikal zur Zangenkopfebene orientiert, wobei die Zangenkopfebene der Zeichenebene gemäß Fig. 3 entspricht. Infolge des Eingreifens des Mitnehmers 39 des Betätigungsrings 29 in die Aufnahme 38 des Mitnehmerarms 37 führt ein translatorischer Stempelhub 43 des Stempels 23 zu einer Rotationsbewegung des Betätigungsrings 29 um die Rotationsachse 42, so dass sich der Betätigungsring 29 in eine Umfangsrichtung 44 bewegt.

Die Abisoliermesser 15-18 sind in Paaren 52, 57 in parallelen Ebenen 60, 61 angeordnet, welche quer zur Rotationsachse 42 angeordnet sind. Hierbei sind die Längsachsen der Abisoliermesser 15 bis 18 kreuzartig in den beiden Ebenen 60, 61 angeordnet. Entlang der Schenkel des Kreuzes können die Abisoliermesser 15-18 über den Arbeitshub der Abisolierzange 9, also über den Stempelhub 43 und die Verschwenkung des Betätigungsrings 29 in Umfangsrichtung 44, gleichzeitig nach innen entlang Schließrichtungen 53, 58, die vertikal zueinander orientiert sind, auf die Rotationsachse 42 zu bewegt werden. Diese Bewegung erfolgt unter Beaufschlagung der Rückstellfedern 30.

Der außenliegende Federfußpunkt der Rückstellfedern 30 ist an einer Abstützfläche 45 der Abisoliermesser 15-18 abgestützt. Für das dargestellte Ausführungsbeispiel bilden die Abisoliermesser 15-18 jeweils zwei radial außenliegend zu der Rotationsachse 42 an dem Abisoliermesser 15-18 vorgesehene Querstege aus, welche Abstützflächen 45a, 45b für zwei einem Abisoliermesser 15-18 zugeordnete Rückstellfedern 30a, 30b ausbilden. Der andere, radial innenliegende Federfußpunkt der Rückstellfedern 30a, 30b ist an einer geeigneten Abstützfläche 46 mindestens einer Deckplatte 19, 20 abgestützt.

Die Abisoliermesser 15-18 weisen auf der radial außenliegenden Seite Gegen-Betätigungsflächen 47a-d auf, die hier ballig oder konvex ausgebildet sind. Die Gegen-Betätigungsflächen 47 liegen an inneren Betätigungsflächen 48a-d des Betätigungsrings 29 an. Die Betätigungsflächen 48 sind gegenüber der Umfangsrichtung 44 derart geneigt, dass eine Verdrehung des Betätigungsrings 29 in Umfangsrichtung 44 zu einer Veränderung des Abstandes des Kontaktpunkts oder der Kontaktfläche der Gegen-Betätigungsflächen 47a-d der Abisoliermesser 15-18 mit den Betätigungsflächen 48a-d von der Rotationsachse 42 zur Folge hat, womit eine radiale Bewegung der Abisoliermesser 15-18 herbeigeführt wird. Die Betätigungsflächen 48 des Betätigungsrings 29 sind gleichmäßig in Umfangsrichtung verteilt an dem Betätigungsring 29 vorgesehen.

Für das dargestellte Ausführungsbeispiel sind die Abisoliermesser 15-18 plattenförmig ausgebildet. Die Oberseite und Unterseite der plattenförmigen Abisoliermesser 15-18 sind an quer zur Rotationsachse 42 orientierten, kreuzartig angeordneten Führungsflächen 49a, 49b sowie 50a, 50b der Deckplatten 19, 20 geführt und zwischen diesen zwischen den beiden Deckplatten 19, 20 gefangen. Hierbei sind die Führungsflächen 49a, 49b für die Abisoliermesser 15, 16 in Richtung der Rotationsachse 42 zumindest um die Plattendicke der Abisoliermesser 15, 16 gegenüber den Führungsflächen 50a, 50b für die Abisoliermesser 17, 18 versetzt. Dieser Versatz ist entsprechend, aber in entgegengesetzte Richtungen an den beiden Deckplatten 19, 20 vorhanden, so dass die Führungsflächen 50a, 50b gegenüber den Führungsflächen 49a, 49b der Deckplatte 20 in Richtung der anderen Deckplatte 19 nach vorne versetzt sind, während in der Deckplatte 19 die entsprechenden Führungsflächen 50a, 50b gegenüber den Führungsflächen 49a, 49b in Richtung der Deckplatte 20 nach hinten versetzt sind.

Die Deckplatten 19, 20 weisen des Weiteren vier kreuzartig orientierte, radial orientierte Führungsnuten 51 auf, in welchen die Abisoliermesser 15-18 seitlich in die Schließrichtung 53 bzw. die Schließrichtung 58 geführt sind. Infolge der Führung der Abisoliermesser 15-18 einerseits durch die Führungsflächen 49, 50 und andererseits durch die Führungsnuten 51 ist gewährleistet, dass diese lediglich einen translatorischen Freiheitsgrad in eine Schließrichtung 53, 58 aufweisen für eine Bewegung in radialer Richtung senkrecht zueinander über den Arbeitshub der Abisolierzange 9.

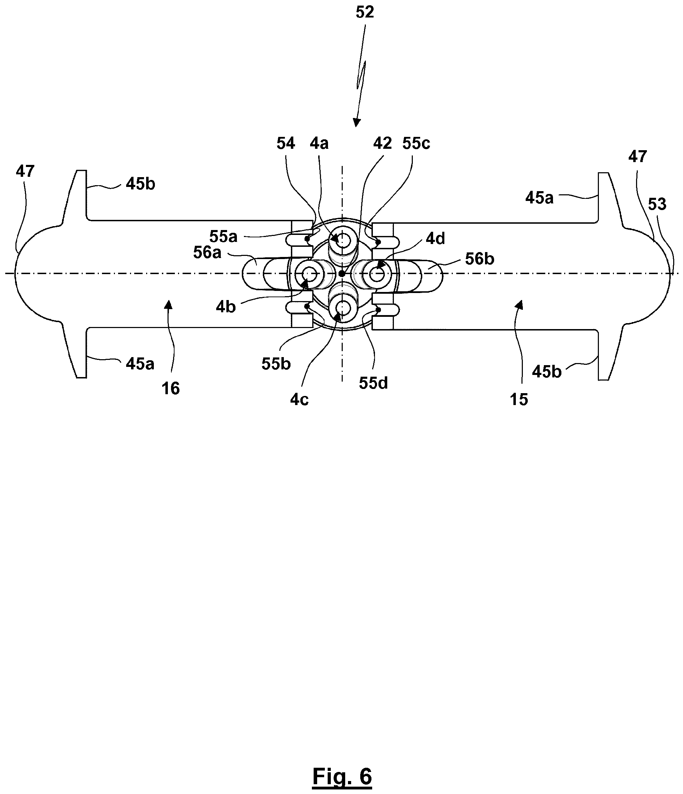

Gemäß **Fig. 6** bilden die Abisoliermesser 15, 16 ein erstes Paar 52. Für das erste Paar 52 der Abisoliermesser 15, 16 geben die Führungsflächen 49a, 49b und die Führungsnuten 51a, 51b die erste Schließrichtung 53 vor, in welche die Abisoliermesser 15, 16 aufeinander zu bewegt werden können. Einander zugewandte Stirnkonturen 54 der Abisoliermesser 15, 16 bilden einerseits jeweils an einem Abisoliermesser 15, 16 Schneidkantenhälften 55a, 55b bzw. 55c, 55d aus. Mittig zwischen den Schneidkantenhälften 55a, 55b bzw. 55c, 55d bilden die Abisoliermesser 15, 16 jeweils eine randoffene, hier U-förmige durchgehende Ausnehmung 56a, 56b aus. Infolge der Ausrichtung der Enden der Adern 4a-d durch die Aufnahmen 21, 22 erstrecken sich die Enden der Adern 4a-d im Bereich der Abisoliermesser 15-18 parallel zueinander. In dem Schnitt gemäß Fig. 6 quer zur Rotationsachse 42, die hier der Längsachse des Kabels 1 entspricht, sind die Adern 4a-d gleichförmig verteilt an dem Umfang eines Kreises vorgesehen. Hierbei entspricht der Durchmesser des Kreises dem Abstand der Schneidkantenhälften 55 eines Abisoliermessers. Die Adern 4a, 4c sind dabei mittig zwischen den gegenüberliegenden Schneidkantenhälften 55a, 55c bzw. 55b, 55d der Abisoliermesser 15, 16 angeordnet. Die anderen Adern 4b, 4d, welche nicht mittels der Abisoliermesser 15, 16 bearbeitet werden, sind auf dem Umfang des Kreises an Positionen angeordnet, welche zu der Erstreckung der Ausnehmungen 56a, 56b ausgerichtet sind. Unabhängig von der Bewegung der Abisoliermesser 15, 16 treten die Adern 4b, 4d infolge der Ausnehmungen 56a, 56b nicht in Wechselwirkung mit den Abisoliermessern 15, 16.

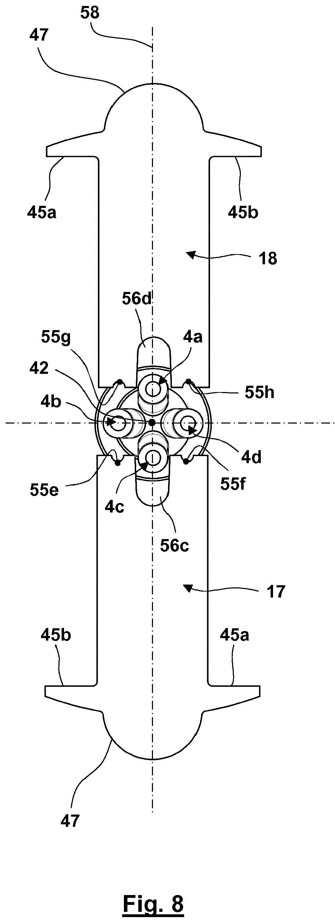

Während Fig. 6 die Abisoliermesser 15, 16 in der Öffnungsstellung zeigt, in welcher die Schneidkantenhälften 55a, 55c sowie 55b, 55d beanstandet von den zugeordneten Adern 4a, 4c angeordnet sind, zeigt Fig. 8 die Schließstellung der Abisoliermesser 15, 16. In der Schließstellung sind die Adern 4b, 4d in den Ausnehmungen 56a, 56b angeordnet. Hingegen haben sich die Schneidkantenhälften 55a, 55c sowie 55b, 55d zu in Umfangsrichtung weitgehend geschlossenen, hier kreisförmigen Schneidkanten 77a, 77c ergänzt, deren Durchmesser dem Durchmesser des Leiters 6a, 6c der Adern 4a, 4c entspricht. Somit schneiden die Schneidkantenhälften 55a, 55c sowie 55b, 55d während des Arbeitshubs mit der Bewegung der Abisoliermesser 15, 16 in die Schließrichtung 53 in die Isolierungen 5a, 5c ein.

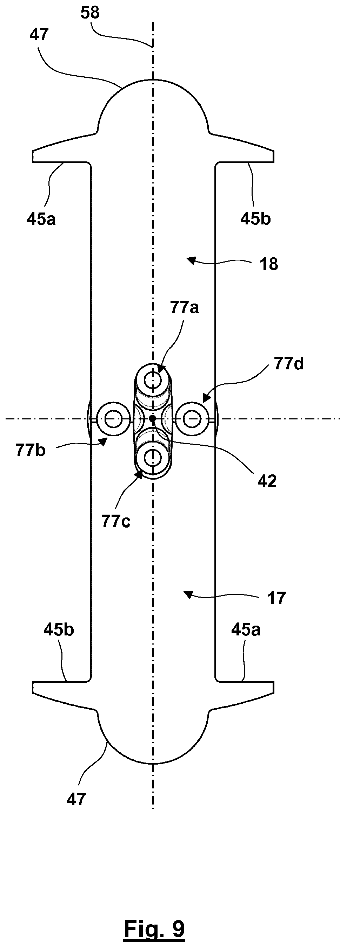

**Fig. 8** **und** **9** zeigen ein zweites Paar 57 von Abisoliermessern 17, 18, welches grundsätzlich entsprechend den Abisoliermessern 15, 16 ausgebildet ist und während des Arbeitshubs von der Öffnungsstellung in die Schließstellung bewegt wird. Allerdings sind die Längsachsen der Abisoliermesser 17, 18 gegenüber den Längsachsen der Abisoliermesser 15, 16 um 90° gedreht, womit auch die Schließrichtung 58 des zweiten Paares 57 der Abisoliermesser 17, 18 um 90° gegenüber der ersten Schließrichtung 53 verdreht ist. Diese abweichende Orientierung hat zur Folge, dass die Schneidkantenhälften 55e und 55g der Abisoliermesser 17, 18 mit der Ader 4b in Wechselwirkung treten, während die Schneidkantenhälften 55f, 55h der Abisoliermesser 17, 18 mit der Ader 4d in Wechselwirkung treten. Infolge der Ausnehmungen 56c, 56d der Abisoliermesser 17, 18 treten diese nicht in Wechselwirkung mit den Adern 4a, 4c. In der Schließstellung gemäß Fig. 9 durchtrennen die Schneidkantenhälften 55e, 55g bzw. 55f, 55h die Isolierungen 5b, 5d der Adern 4b, 4d.

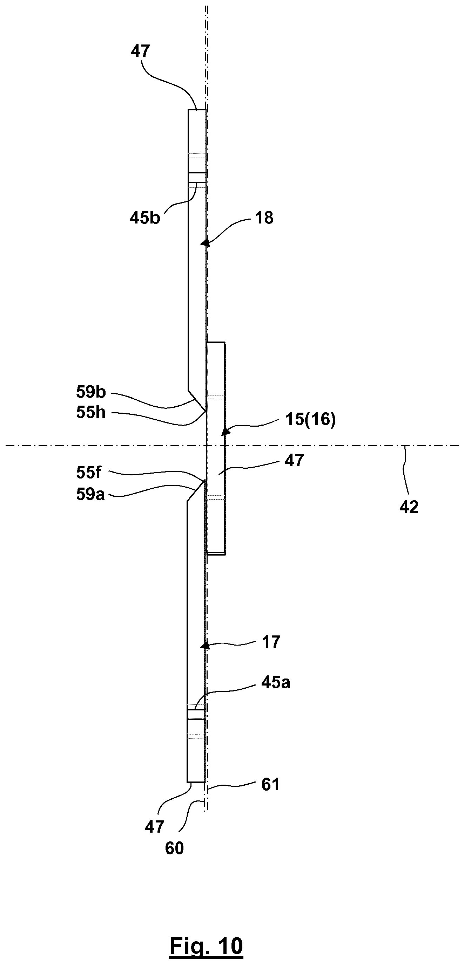

Die Paare 52, 57 der plattenförmigen Abisoliermesser 15, 16 bzw. 17, 18 sind in unterschiedlichen Ebenen 60, 61 angeordnet, da wie zuvor erläutert die Führungsflächen 49a, 49b für das erste Paar 52 der Abisoliermesser 15, 16 gegenüber den Führungsflächen 50a, 50b für das zweite Paar 57 der Abisoliermesser 17, 18 versetzt sind in einem Ausmaß, welches zumindest der Plattendicke der Abisoliermesser 16-18 entspricht. In **Fig. 10** ist zu erkennen, dass hierbei die Abisoliermesser 15, 16 des ersten Paares 52 und die Abisoliermesser 17, 18 des zweiten Paares 57 unmittelbar aneinander anliegen und für die Bewegung in die Schließrichtungen 53, 58 aneinander entlang gleiten. In Fig. 10 ist des Weiteren zu erkennen, dass die Schneidkantenhälften der Abisoliermesser 17, 18 lediglich einseitig gefast sind mit einer Fase 59a, 59b lediglich auf der den Abisoliermessern 15, 16 abgewandten Seite. Dies hat zur Folge, dass die Schneidkantenhälften 55f, 55h der Abisoliermesser 17, 18 in einer zweiten Ebene 60 angeordnet sind, die auf der dem ersten Paar 52 zugewandten Seite der Abisoliermesser 17, 18 angeordnet ist. Anders gesagt befinden sich die Schneidkantenhälften 55f, 55h unmittelbar benachbart den Abisoliermessern 15, 16 des ersten Paares 52. Das Entsprechende gilt für die weiteren Schneidkantenpaare 55e, 55g der Abisoliermesser 17, 18. Auch die Abisoliermesser 15, 16 des ersten Paares 52 sind lediglich einseitig gefast, wobei die Fase auf der in Abisoliermessern 17, 18 abgewandten Seite der Abisoliermesser 15, 16 angeordnet ist. Somit sind die Schneidkantenhälften 55a, 55c sowie 55b, 55d in einer ersten Ebene 61 angeordnet, die unmittelbar benachbart der zweiten Ebene 60 angeordnet ist. Daher schneiden sämtliche Schneidkantenhälften 55a-55h ungefähr bei derselben Längserstreckung der Adern 4a-d in deren Isolierungen 5a-d.

Die Paare der Schneidkantenhälften 55a, 55c (bzw. 55b, 55d oder 55e, 55g oder 55 f, 55h) der Paare 52, 57 der Abisoliermesser 15,16, 17,18 bilden gemeinsam Schneidkanten 77a, 77b, 77c, 77d, die jeweils in einer Ebene 60, 61 angeordnet sind und sämtlich in lediglich zwei unmittelbar benachbarten Ebenen 60, 61 angeordnet sind. Die Schneidkanten 77 schneiden über den Arbeitshub in die Isolierung 5 der Adern 4 ein. Für das dargestellte Ausführungsbeispiel sind die Schneidkanten 77 in der Schließstellung weitestgehend oder vollständig bis auf eine toleranzbedingte Lücke in Umfangsrichtung geschlossen. Durchaus möglich ist aber, dass hier zwischen zugeordneten Schneidkantenhälften auch Lücken verbleiben, so dass das Beseitigen des eingeschnittenen Endes der Isolierung 5 ein gewisses Abreißen des eingeschnittenen Endbereiches erfordert. Der Begriff "Schneidkantenhälfte" muss auch nicht zwingend bedeuten, dass das Abisoliermesser in der Schneidkantenhälfte die Hälfte der gebildeten Schneidkante bereitstellt. Durchaus möglich ist vielmehr, dass zugeordnete Schneidkantenhälften eines Paares von Abisoliermessern unterschiedliche Schneidkantenlängen und/oder Konturen aufweisen.

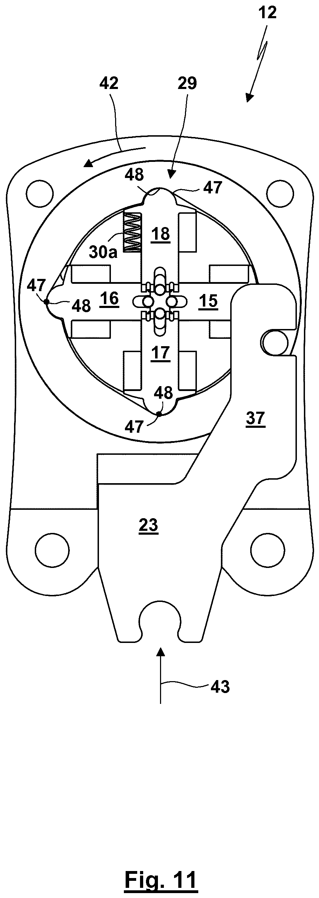

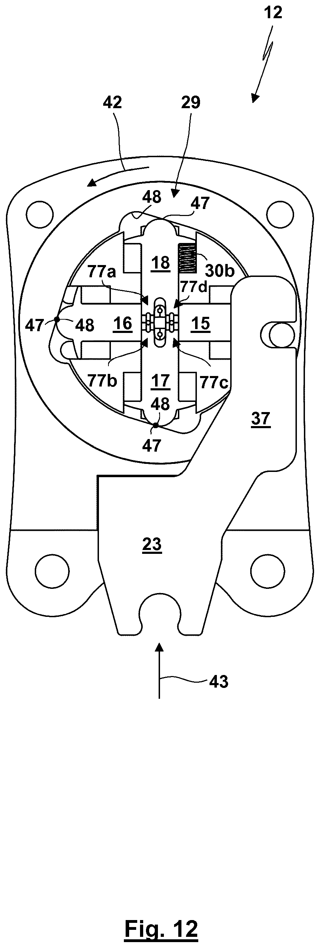

**Fig. 11** **und** **12** zeigen den Zangenkopf 12 mit demontierter Deckplatte 19. Hierbei zeigt Fig. 11 den Zangenkopf in der Öffnungsstellung, also vor dem Durchlaufen des Arbeitshubs, während Fig. 12 den Zangenkopf 12 in der Schließstellung zeigt, also nach dem Durchlaufen des Arbeitshubs durch die Betätigung der Handhebel 10, 11. Zu erkennen ist hier, dass mit dem Durchlaufen des Arbeitshubs der Stempelhub 43 des Stempels 23 dazu führt, dass der Betätigungsring 29 in Umfangsrichtung 44 um die Rotationsachse 42 verdreht wird. Diese Bewegung des Betätigungsrings 29 hat zur Folge, dass die gegenüber der Umfangsrichtung geneigten Betätigungsflächen 48 gegenüber den Gegen-Betätigungsflächen 47 der Abisoliermesser 15-18 bewegt werden, womit die Gegen-Betätigungsflächen 47 entlang der Betätigungsflächen 48 gleiten und die Abisoliermesser 15, 16, 17, 18 gleichzeitig nach innen in die Bewegungsrichtungen 53, 58 in Richtung der Rotationsachse 52 translatorisch verschoben werden, was mit der Annäherung der einander zugeordneten Schneidkantenhälften 55 einhergeht, bis deren Schließstellung erreicht ist mit dem Durchtrennen der Isolierungen 5 der Adern 4. Hierbei werden die beiden Paare 52, 57 der Abisoliermesser 15-18 aneinander vorbeigeführt, wobei jeweils zwei Adern 4a, 4c bzw. 4b, 4d von einem Paar 52 von Abisoliermessern 15, 16 bzw. einem Paar 57 von Abisoliermessern 17, 18 eingeschnitten werden.

**Fig. 13** zeigt einen Schnitt durch den Auswerfer 31, der an dem Zangenkopf 12 befestigt ist. Zu erkennen sind hier die fluchtenden Aufnahmen 21a, 22a sowie 21c, 22c der beiden Deckplatten 19, 20 und die hiermit fluchtenden Stifte 35a, 35c des Auswerfers 31, welche in einem Endbereich in dem Betätigungsknopf 34 gehalten sind. Werden die Adern 4a, 4c durch die Aufnahmen 21a, 22a bzw. 21c, 22c gesteckt, kommen diese zur Anlage an die von den Stirnseiten der Stifte 35a, 35c gebildeten Anschläge 36a, 36c. Nach dem Abisolieren kann die Betätigung des Betätigungsknopfes 34 in eine Betätigungsrichtung 62 erfolgen, um die in den Aufnahmen 22a, 22c zwischen den Abisoliermessern 15-18 und den Anschlägen 36a, 36c abgetrennten Enden der Isolierungen 5a, 5c auszuwerfen. (Das Entsprechende gilt in gegenüber der Schnittführung in Fig. 13 um 90° versetzt angeordneten Aufnahmen 21b, 21d, 22b, 22d mit den Stiften 35b, 35d und Anschlägen 36b, 36d).

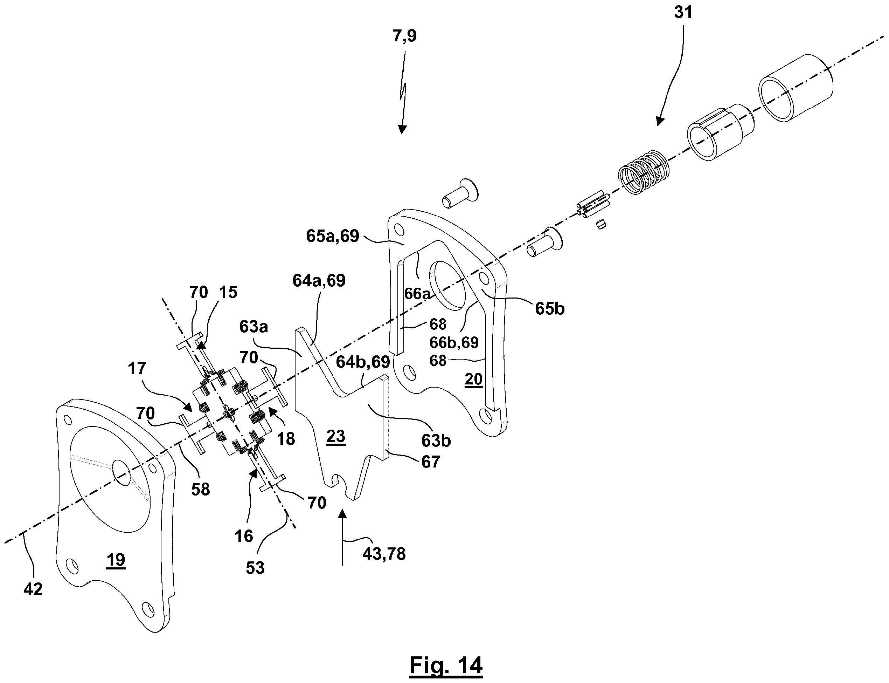

**Fig. 14** zeigt in einer Explosionsdarstellung eine alternative Ausgestaltung einer Abisolierzange 9. Hier wird ein Stempelhub 23 nicht genutzt, um eine Verdrehung eines Betätigungsrings 29 herbeizuführen. Vielmehr bildet hier der Stempel 23 zwei Betätigungskeile 63a, 63b, welche V-förmige Keilflächen 64a, 64b ausbilden. Auch die Deckplatten 19, 20 verfügen über Betätigungskeile 65a, 65b mit von diesen gebildeten Betätigungsflächen 66a, 66b. Der Stempel 23 mit den Betätigungskeilen 63a, 63b ist mit seitlichen Führungsflächen 67 verschieblich in Richtung des Stempelhubs 43 gegenüber entsprechenden Führungsflächen 68 der Deckplatten 19, 20 geführt. Die Keilflächen 64a, 64b des Stempels 23 und die Keilflächen 66a, 66b der Deckplatten 19, 20 bilden rautenförmig angeordnete Betätigungsflächen 69, wobei sich über den Stempelhub 43 (der hier unmittelbar einer Verschieberichtung 78 des Betätigungselements entspricht) der Abstand gegenüberliegender Betätigungsflächen bzw. Keilflächen 64a, 66b, 64b, 66a verringert. Für das in Fig. 14 dargestellte Ausführungsbeispiel sind die Abisoliermesser 15-18 in einem Einsatz 70 so geführt, dass sich das erste Paar 52 der Abisoliermesser 15, 16 lediglich in die erste Schließrichtung 53 bewegen kann, während sich das zweite Paar 57 der Abisoliermesser 17, 18 lediglich in die zweite Schließrichtung 58 bewegen kann. Die Gegen-Betätigungsflächen 70 der Abisoliermesser 15-18 liegen an den von den einerseits von dem Stempel 23 und andererseits von den Deckplatten 19, 20 ausgebildeten Betätigungsflächen 69 an. Mit einer Bewegung des Stempels 23 über den Stempelhub 43 in die Verschieberichtung und einer Verringerung des Abstandes der gegenüberliegenden Keilflächen 64a, 66b bzw. 64b, 66a verringert sich auch der Abstand der Gegen-Betätigungsflächen 70 der Abisoliermesser 17, 18 bzw. der Abisoliermesser 15, 16, womit diese in Schließrichtung betätigt werden.

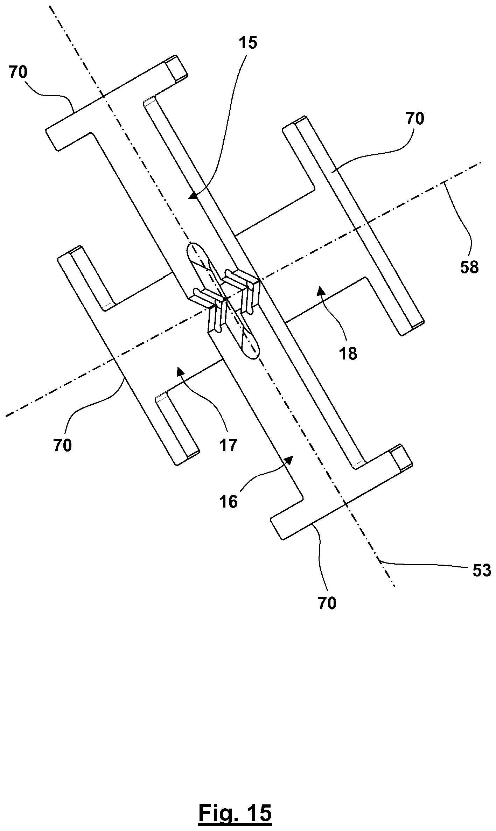

**Fig. 15** zeigt in räumlicher Ansicht lediglich die Paare 52, 57 der Abisoliermesser 15, 16 bzw. 17, 18 mit den zugeordneten Schließrichtungen 53, 58. Auch hier ist zu erkennen, dass die Paare 52, 57 der Abisoliermesser 15, 16 sowie 17, 18 unmittelbar aneinander entlanggleiten. Die Schneidkantenhälften der Abisoliermesser 15-18 sind lediglich einseitig mit einer Fase ausgestattet, so dass die Schneidkantenhälften der beiden Paare 52, 57 der Abisoliermesser 15-18 unmittelbar benachbart angeordnet sind und in parallelen, unmittelbar benachbarten Ebenen über den Schließhub bewegt werden.

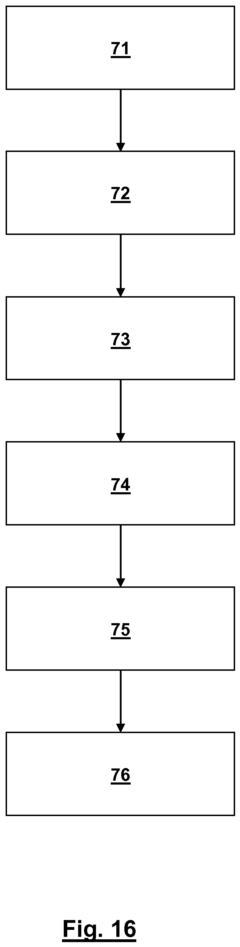

**Fig. 16** zeigt exemplarisch und stark schematisiert ein Verfahren zum Abisolieren eines mehradrigen Kabels 1:
In einem Verfahrensschritt 71 wird ein Ende einer äußeren Isolierung 2 und ggf. einer Schutzhülle 3 abgetrennt und von den Enden der Adern 4 abgezogen.

In einem anschließenden Verfahrensschritt 72 werden die freien Enden der Adern 4a-4d durch die Aufnahmen 21a-21d in das Innere des Zangenkopfes 12 eingeführt und diese werden durch die Zwischenräume zwischen den Stirnkonturen der Abisoliermesser 15-18 hindurchgeführt, bis die beiden Enden der Adern 4a-4d auch durch die Aufnahmen 22a-22d hindurchtreten und schließlich zur Anlage an die von den Stiften 35 gebildeten Anschläge 36 kommen.

Optional kann dann in einem Verfahrensschritt 73 ein zusätzliches Fixieren oder Klemmen der Adern 4a-4d in dem Zangenkopf 12 erfolgen.

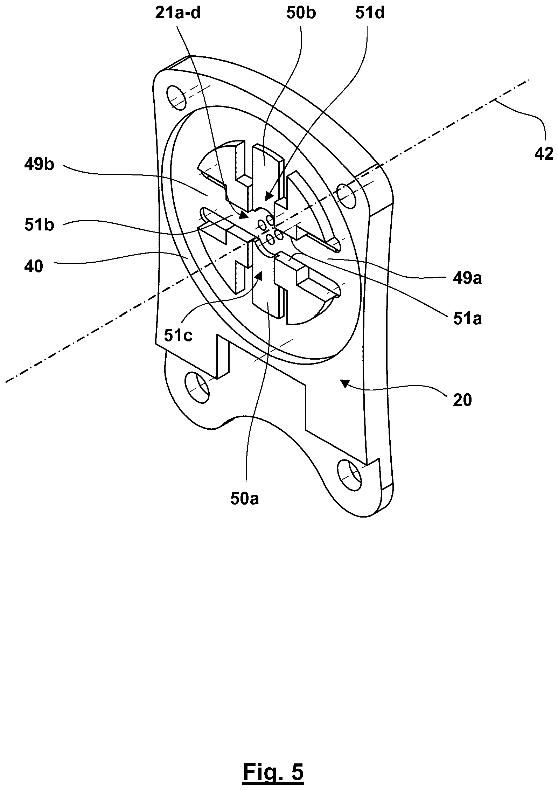

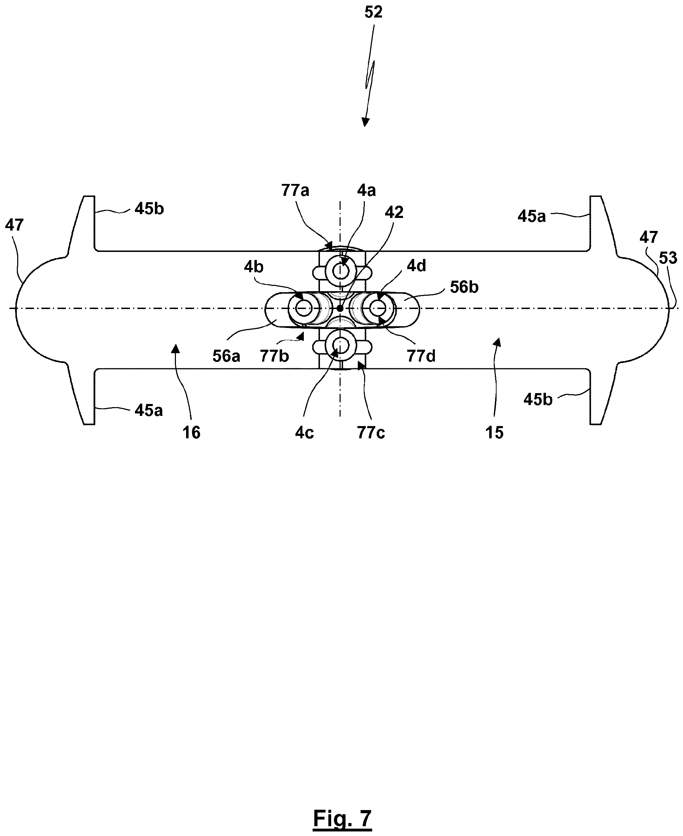

In einem Verfahrensschritt 74 wird dann der Arbeitshub durchlaufen, wozu eine Verschwenkung der Handhebel 10, 11 der Abisolierzange 9 erfolgt und der Stempel 23 den Stempelhub 43 durchläuft. Dies verursacht infolge der Verdrehung des Betätigungsrings 29 für das Ausführungsbeispiel gemäß Fig. 3 bis 13 oder infolge der translatorischen Bewegung der Betätigungskeile 63a, 63b der Ausführungsform gemäß Fig. 15 und 16 die Schließbewegung der Abisoliermesser 15-18, wobei diese dann in den beiden Paaren 52, 57 aneinander entlang gleiten und jeweils ein Paar der Abisoliermesser die Isolierungen eines zugeordneten Paares von Adern einschneidet.

In einem Verfahrensschritt 75 werden die Handhebel 10, 11 und die Abisoliermesser 15-18 weiterhin in der Schließstellung belassen. Durch Ziehen an dem Kabel 1 kann dann das Herausziehen des Kabels 1 erfolgen, wobei die eingeschnittenen Enden der Isolierungen der 5 der Adern 4 über die Abisoliermesser 15-18 zurückgehalten werden, so dass diese in den Aufnahmen 22a - 22d verbleiben.

In einem optionalen Verfahrensschritt 76 kann dann eine Betätigung des Auswerfers 31 erfolgen, was das Auswerfen der abgezogenen Enden der Isolierungen 5 der Adern 4 zur Folge hat.

Wie eingangs erläutert kann für die Erzeugung der Antriebsbewegung der Abisoliermesser ein beliebiger Antriebsmechanismus 14 eingesetzt werden, wobei auch nicht zwingend Betätigungskeile oder ein Betätigungsring verwendet müssen. Im Folgenden werden lediglich einige Beispiele für einen ebenfalls nutzbaren Antriebmechanismus für die Abisoliermesser 15-18 genannt:
- Möglich ist, dass eine translatorische Bewegung eines Stempels über einen Kniehebeltrieb erzeugt wird, wie dieser in der Druckschrift DE 19 713 580 C2 oder DE 19 807 737 C2, DE 29 803 336 U1 beschrieben ist.
- Auch möglich ist, dass eine Betätigung eines Betätigungsrings über Handhebel unmittelbar durch einen an einem Handhebel fixierten Betätigungsring erfolgt, vgl. DE 10 2005 003 615 B3 und DE 10 2005 003 617 B3.
- Eine weitere Möglichkeit für eine Antriebsverbindung zur Verdrehung eines Betätigungsrings ist in DE 10 2011 052 967 B4 beschrieben.
- Grundsätzlich möglich wäre auch die Verdrehung eines Betätigungsrings über ein Ratschengetriebe, wie dieses bspw. in der nicht-vorveröffentlichten Patentanmeldung EP 15 191 264.9 beschrieben ist.
- Für eine Möglichkeit, einen Betätigungsring über ein zwischengeschaltetes Kraft-Feder-Ausgleichselement anzutreiben, wird auf die Druckschrift EP 3 012 924 A1 verwiesen.
- Einen weiteren Antriebsmechanismus zum Antreiben eines Betätigungsrings über Handhebel offenbart EP 2 905 848 A1.
- EP 2 672 580 A1 offenbart den Antrieb eines Stempels über einen Kniehebeltrieb.

Die Bewegung der Abisoliermesser 15, 16, 17, 18 ist derart miteinander gekoppelt, dass diese sich gemeinsam und in dem selben Ausmaß bewegen. Für die dargestellten Ausführungsbeispiele erfolgt die Kopplung der Bewegung der Abisoliermesser 15, 16, 17, 18 über den Kontakt der Betätigungsflächen 48, 69 des Betätigungselements, insbesondere des Betätigungsrings 29 oder des Betätigungskeils 63, mit den Gegen-Betätigungsflächen 47, 70 der Abisoliermesser 15, 16, 17, 18.

Möglich ist, dass bei dem mehradrigen Kabel 1 alle Adern 4 dieselben Querschnitte besitzen, womit dann auch die Schneidkantenhälften 55 der Abisoliermesser 15, 16; 17, 18 dieselben Konturen aufweisen. Durchaus möglich ist aber auch, dass die Adern 5 unterschiedliche Querschnitte besitzen. Um lediglich ein nicht beschränkendes Beispiel zu nennen, können bei einem vieradrigen Kabel Adern mit einem Querschnitt von 0,14 mm², 0,25 mm², 0,35 mm² und 0,5 mm² vorhanden sein. In diesem Fall sind die Konturen der Schneidkantenhälften 55 der Abisoliermesser 15, 16; 17, 18 mit unterschiedlichen entsprechenden Radien ausgestattet. Möglich ist in diesem Fall, dass die einzelnen Schneidkantenhälften 55 an den Abisoliermessern 15, 16; 17, 18 unterschiedlich gekennzeichnet sind, um eine Zuordnung der Adern mit dem zugeordneten Durchmesser zu der Schneidkantenhälfte zu ermöglichen. Für den Fall, dass die unterschiedlichen Adern farblich gekennzeichnet sind, kann diese farbliche Kennzeichnung auch für die Kennzeichnung der unterschiedlichen Schneidkantenhälften verwendet werden.

Für die dargestellten Ausführungsbeispiele waren die Schneidkantenhälften jeweils mit einer ungefähr halbkreisförmigen Kontur der Schneidkantenhälften ausgestattet. Durchaus möglich ist aber auch eine abweichende Konturgebung der Schneide. So können beispielsweise auch die Konturen der Schneidkantenhälften geradlinig ausgebildet sein, womit diese dann nicht über den halben Umfang eine Isolierung eines Kabels einschneiden, sondern lediglich einen geraden Einschnitt der Mantelfläche der Isolierung erzeugen. Ist in dem Antriebsmechanismus 14 zwischen den Handhebeln 10, 11 und den Abisoliermessern 15, 16; 17, 18 ein elastisches Element zwischengeordnet, kann mit derartigen Abisoliermessern 15, 16; 17, 18 mit geradlinigen Schneiden auch eine Bearbeitung von Adern mit unterschiedlichen Durchmesser erfolgen, wobei eine Anpassung dann über das elastische Element erfolgt: In diesem Fall schneidet zunächst das Abisoliermesser 15, 16; 17, 18 in die Isolierung 5 der Ader 4 ein. Trifft die Schneidkantenhälfte dann auf den härteren Leiter 6, führt eine weitere Bewegung der Handhebel 10, 11 nicht mehr zu einer Bewegung des Abisoliermessers, sondern zu einer elastischen Beaufschlagung des Federelements. Andere Adern mit u. U. abweichenden Durchmessern können dann hingegen weiter im Bereich der Isolierung eingeschnitten werden.

### BEZUGSZEICHENLISTE

- 1: mehradriges Kabel
- 2: äußere Isolierung
- 3: Schutzhülle
- 4: Ader
- 5: Isolierung
- 6: Leiter
- 7: Abisolierwerkzeug
- 8: Abisolierlänge
- 9: Abisolierzange
- 10: Handhebel
- 11: Handhebel
- 12: Zangenkopf
- 13: Werkzeugkopf
- 14: Antriebsmechanismus
- 15: Abisoliermesser
- 16: Abisoliermesser
- 17: Abisoliermesser
- 18: Abisoliermesser
- 19: Deckplatte
- 20: Deckplatte
- 21: Aufnahme
- 22: Aufnahme
- 23: Stempel
- 24: Druckbolzen
- 25: Aufnahme
- 26: Zuglasche
- 27: Zuglasche
- 28: Bolzen
- 29: Betätigungsring
- 30: Rückstellfeder
- 31: Auswerfer
- 32: Gehäuse
- 33: Druckfeder
- 34: Betätigungsknopf
- 35: Stift
- 36: Anschlag
- 37: Mitnehmerarm
- 38: Aufnahme
- 39: Mitnehmer
- 40: Führungsfläche
- 41: Mantelfläche
- 42: Rotationsachse
- 43: Stempelhub
- 44: Umfangsrichtung
- 45: Abstützfläche
- 46: Abstützfläche
- 47: Gegen-Betätigungsflächen
- 48: Betätigungsflächen
- 49: Führungsfläche
- 50: Führungsfläche
- 51: Führungsnut
- 52: erstes Paar
- 53: erste Schließrichtung
- 54: Stirnkontur
- 55: Schneidkantenhälfte
- 56: Ausnehmung
- 57: zweites Paar
- 58: zweite Schließrichtung
- 59: Fase
- 60: zweite Ebene
- 61: erste Ebene
- 62: Betätigungsrichtung
- 63: Betätigungskeil
- 64: Keilfläche
- 65: Betätigungskeil
- 66: Keilfläche
- 67: Führungsfläche
- 68: Führungsfläche
- 69: Betätigungsfläche
- 70: Gegen-Betätigungsfläche
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Schneidkante
- 78: Verschieberichtung

## Patentansprüche

1. Abisolierwerkzeug (7) zum gleichzeitigen Abisolieren mehrerer Adern (4a, 4b, 4c, 4d) eines mehradrigen Kabels (1) mit
a) einem ersten Paar (52) von Abisoliermessern (15, 16),
aa) die jeweils zwei Schneidkantenhälften (55a, 55b; 55c, 55d) aufweisen,
ab) die mit den einander zugeordneten Schneidkantenhälften (55a, 55c; 55b, 55d) gemeinsam zwei Schneidkanten (77a, 77c) jeweils für ein Einschneiden einer Isolierung (5a, 5c) einer Ader (4a, 4c) des Kabels (1) bilden und
ac) deren einander zugeordnete Schneidkantenhälften (55a, 55c; 55b, 55d) über einen Arbeitshub des Abisolierwerkzeugs (7) zum Einschneiden in die Isolierung (5) in einer ersten Ebene (61) relativ zueinander in eine erste Schließrichtung (53) bewegt werden,
und
b) einem zweiten Paar (57) von Abisoliermessern (17, 18),
ba) die jeweils zwei Schneidkantenhälften (55e, 55f; 55g, 55h) aufweisen,
bb) die mit den einander zugeordneten Schneidkantenhälften (55e, 55g; 55f, 55h) gemeinsam zwei Schneidkanten (77b, 77d) jeweils für ein Einschneiden einer Isolierung (5b, 5d) einer anderen Ader (4b, 4d) des Kabels (1) bilden und
bc) deren einander zugeordnete Schneidkantenhälften (55e, 55g; 55f, 55h) über den Arbeitshub des Abisolierwerkzeugs (7) zum Einschneiden in die Isolierung (5) in einer von der ersten Ebene (61) abweichenden zweiten Ebene (60) relativ zueinander in eine von der ersten Schließrichtung (53) abweichende zweite Schließrichtung (58) bewegt werden,
wobei die Schneidkantenhälften (55a, 55b; 55c, 55d; 55e, 55f; 55g, 55h) jeweils zum Einschneiden in eine Isolierung (5) einer Ader (4) des mehradrigen Kabels (1) angepasst sind.

2. Abisolierwerkzeug (7) nach Anspruch 1, **dadurch gekennzeichnet, dass**
a) die erste Ebene (61) und die zweite Ebene (60) parallel zueinander und unmittelbar benachbart zueinander angeordnet sind,
b) Schneidkantenhälften (55a, 55b; 55c, 55d) der Abisoliermesser (15, 16) des ersten Paares (52) auf der den Abisoliermessern (17, 18) des zweiten Paares (57) zugewandten Seite der Abisoliermesser (15, 16) des ersten Paares (52) angeordnet sind und
c) Schneidkantenhälften (55e, 55f; 55g, 55h) der Abisoliermesser (17, 18) des zweiten Paares (57) auf der den Abisoliermessern (15, 16) des ersten Paares (52) zugewandten Seite der Abisoliermesser (17, 18) des zweiten Paares (57) angeordnet sind.

3. Abisolierwerkzeug (7) nach einem der vorhergehenden Ansprüche, **dadurch gekennzeichnet, dass** mindestens ein Abisoliermesser (16) eine randoffene Ausnehmung (56b) aufweist, durch welche eine nicht von diesem Abisoliermesser (16) bearbeitete Ader (4d) hindurchtreten kann.

4. Abisolierwerkzeug (7) nach einem der vorhergehenden Ansprüche, **dadurch gekennzeichnet, dass**
a) das Abisolierwerkzeug (7) ein Betätigungselement aufweist, welches über den Arbeitshub des Abisolierwerkzeugs (7) bewegt wird, und
b) Abisoliermesser (15, 16, 17, 18) Gegen-Betätigungsflächen (47; 70) aufweisen, die an Betätigungsflächen (48; 69) des Betätigungselements anliegen,
c) wobei das Betätigungselement gegenüber einem Werkzeugkopf (13) über den Arbeitshub in eine Betätigungsrichtung bewegt wird und das Betätigungselement gegenüber der Betätigungsrichtung geneigte Betätigungsflächen (48; 69) ausbildet.

5. Abisolierwerkzeug (7) nach Anspruch 4, **dadurch gekennzeichnet, dass** das Betätigungselement einen Betätigungsring (29) aufweist und die Betätigungsrichtung eine Umfangrichtung (44) des Betätigungsrings (29) ist, in die der Betätigungsring (29) verdreht wird, wobei die Betätigungsflächen (48) gegenüber der Umfangsrichtung (44) geneigt sind.

6. Abisolierwerkzeug (7) nach Anspruch 4, **dadurch gekennzeichnet, dass** das Betätigungselement einen Betätigungskeil (63) aufweist und die Betätigungsrichtung eine Verschieberichtung (78) des Betätigungskeils (63) ist, wobei eine Keilfläche (64) des Betätigungskeils (63), die ein Betätigungsfläche ausbildet, gegenüber der Verschieberichtung (78) geneigt ist.

7. Abisolierwerkzeug (7) nach einem der vorhergehenden Ansprüche, **dadurch gekennzeichnet, dass** Aufnahmen (21, 22) für zumindest zwei Adern (4) eines Kabels (1) vorhanden sind.

8. Abisolierwerkzeug (7) nach Anspruch 7, **dadurch gekennzeichnet, dass** die Aufnahmen (21, 22) Anschläge (36) für die Vorgabe der Einlegetiefe der Adern (4) aufweisen.

9. Abisolierwerkzeug (7) nach einem der vorhergehenden Ansprüche, **dadurch gekennzeichnet, dass** ein Auswerfer (31) vorhanden ist, über welchen mindestens ein mit dem Abisolierwerkzeug (7) über den Arbeitshub abgetrenntes Ende einer Isolierung (5) aus dem Abisolierwerkzeug (7) ausgeworfen werden kann.

10. Abisolierwerkzeug (7) nach Anspruch 9 in Rückbeziehung auf Anspruch 8, **dadurch gekennzeichnet, dass** der Auswerfer (31) zum Auswerfen mindestens eines mit dem Abisolierwerkzeug (7) über den Arbeitshub abgetrennten Endes einer Isolierung (5) mindestens einen Anschlag (36) für die Vorgabe der Einlegetiefe der Adern (4) bewegt.

11. Abisolierwerkzeug (7) nach einem der vorhergehenden Ansprüche, **dadurch gekennzeichnet, dass** die Paare (52, 57) der Abisoliermesser (15, 16, 17, 18) in der Schließstellung nicht miteinander fluchtende Schneidkanten (77a, 77b, 77c, 77d) aufweisen.

12. Abisolierwerkzeug (7) nach einem der vorhergehenden Ansprüche, **dadurch gekennzeichnet, dass** die Abisoliermesser (15)
a) eine Gegen-Betätigungsfläche (47) und/oder
b) eine Abstützfläche (45) für einen Federfußpunkt einer Rückstellfeder (30) aufweisen.

13. Verfahren zum gleichzeitigen Abisolieren mehrerer Adern (4a, 4b, 4c, 4d) eines Kabels (1) mit mindestens vier mit Isolierungen (5) ausgestatteten Adern (4) mit einem Abisolierwerkzeug (7) nach einem der Ansprüche 1 bis 12, mit folgenden Verfahrensschritten:
a) Einlegen von mindestens vier Adern (4) in mindestens eine Aufnahme (21, 22) des Abisolierwerkzeugs (7),
b) relative Bewegung des ersten Paares (52) von Abisoliermessern (15, 16) über einen Arbeitshub des Abisolierwerkzeugs (7) mit einem Einschneiden des ersten Paares (52) der Abisoliermesser (15, 16) in Isolierungen (5a, 5c) von zwei Adern (4a, 4c) des Kabels (1) und gleichzeitige relative Bewegung des zweiten Paares (57) von Abisoliermessern (17, 18) über den Arbeitshub des Abisolierwerkzeugs (7) mit einem Einschneiden des zweiten Paares (57) der Abisoliermesser (17, 18) in Isolierungen (5b, 5d) von zwei anderen Adern (4b, 4d) des Kabels (1),
c) wobei das erste Paar (52) der Abisoliermesser (15, 16) und das zweite Paar (57) der Abisoliermesser (17, 18) über den Arbeitshub in parallelen Ebenen (60, 61) bewegt werden.

## Claims

1. Stripping tool (7) for simultaneously stripping a plurality of conductors (4a, 4b, 4c, 4d) of a cable (1) having multiple conductors with
a) a first pair (52) of stripping blades (15, 16),
aa) which each comprise two cutting edge halves (55a, 55b; 55c, 55 d),
ab) associated cutting edge halves (55a, 55c; 55b, 55d) commonly forming two cutting edges (77a, 77c) each being designated for cutting of an insulation (5a, 5c) of a conductor (4a, 4c) of the cable (1) and
ac) associated cutting edge halves (55a, 55c; 55b, 55d) of the stripping blades (15, 16) being moved relative to each other in a first closing direction (53) in a first plane (61) over a working stroke of the stripping tool (7) for cutting into the insulation (5) and
b) a second pair (57) of stripping blades (17, 18)
ba) which each comprise two cutting edge halves (55e, 55f; 55g, 55h),
bb) associated cutting edge halves (55e, 55g; 55f, 55h) commonly forming two cutting edges (77b, 77d) each being designated for cutting of an insulation (5b, 5d) of another conductor (4b, 4d) of the cable (1) and
bc) associated cutting edge halves (55e, 55g; 55f, 55h) of the stripping blades (17, 18) being moved relative to each other in a second closing direction (58) in a second plane (60) over the working stroke of the stripping tool (7) for cutting into the insulation (5), the second plane (60) differing from the first plane (61) and the second closing direction differing from the first closing direction (53),
the cutting edge halves (55a, 55b; 55c, 55d; 55e, 55f; 55g, 55h) each being adapted for cutting into an insulation (5) of a conductor (4) of the cable (1) comprising multiple conductors.

2. Stripping tool (7) of claim 1, **characterized in that**
a) the first plane (61) and the second plane (60) are parallel to each other and arranged directly adjacent to each other,
b) cutting edge halves (55a, 55b; 55c, 55d) of the stripping blades (15, 16) of the first pair (52) are arranged on the side of the stripping blades (15, 16) of the first pair (52) facing towards the stripping blades (17, 18) of the second pair (57) and
c) cutting edge halves (55e, 55f; 55g, 55h) of the stripping blades (17, 18) of the second pair (57) are arranged on the side of the stripping blades (17, 18) of the second pair (57) facing towards the stripping blades (15, 16) of the first pair (52).

3. Stripping tool (7) of one of the preceding claims, **characterized in that** at least one stripping blade (16) comprises a recess (56b) having a closed edge through which a conductor (4d) which is not processed by this stripping blade (16) can pass.

4. Stripping tool (7) of one of the preceding claims, **characterized in that**
a) the stripping tool (7) comprises an actuation element which is moved over the working stroke of the stripping tool (7) and
b) stripping blades (15, 16, 17, 18) comprise counter actuation surfaces (47; 70) which contact actuation surfaces (48; 69) of the actuation element,
c) the actuation element being moved relative to a tool head (13) over the working stroke in an actuation direction and the actuation element having actuation surfaces (48; 69) being inclined relative to the actuation direction.

5. Stripping tool (7) of claim 4, **characterized in that** the actuation element comprises in actuation ring (29) and the actuation direction is a circumferential direction (44) of the actuation ring (29) into which the actuation ring (29) is rotated, the actuation surfaces (48) being inclined relative to the circumferential direction (44).

6. Stripping tool (7) of claim 4, **characterized in that** the actuation element is an actuation wedge (63) and the actuation direction is a direction of a displacement (78) of the actuation wedge (63), a wedge surface (64) of the actuation wedge (63) establishing an actuation surface being inclined relative to the displacement direction (78).

7. Stripping tool (7) of one of the preceding claims, **characterized in that** accommodations (21, 22) for at least two conductors (4) of a cable (1) are provided.

8. Stripping tool (7) of claim 7, **characterized in that** the accommodations (21, 22) comprise stops (36) for defining the insertion depth of the conductors (4).

9. Stripping tool (7) of one of the preceding claims, **characterized in that** an ejector (31) is provided by which at least one end of an insulation (5) separated by the stripping tool (7) over the working stroke can be ejected from the stripping tool (7).

10. Stripping tool (7) of claim 9 when referring back to claim 8, **characterized in that** the ejector (31) for ejecting at least one end of an insulation (5) separated by the stripping tool (7) over the working stroke moves at least one stop (36) used for defining the insertion depth of the conductors (4).

11. Stripping tool (7) of one of the preceding claims, **characterized in that** in the closed position the pairs (52, 57) of the stripping blades (15, 16, 17, 18) comprise cutting edges (77 a, 77b, 77c, 77d) that are not aligned with each other.

12. Stripping tool (7) of one of the preceding claims, **characterized in that** the stripping blades (15) comprise
a) a counter actuation surface (47) and/or
b) a supporting surface (45) for a spring base of a return spring (30).

13. Method for simultaneously stripping a plurality of conductors (4a, 4b, 4c, 4d) of a cable (1) comprising at least four conductors (4) equipped with insulations (5) with a stripping tool (7) of one of claims 1 to 12 with the following method steps:
a) insertion of at least four conductors (4) into at least one accommodation (21, 22) of the stripping tool (7)
b) causing of a relative movement of the first pair (52) of stripping blades (15, 16) over a working stroke of the stripping tool (7) with a cutting of the first pair (52) of stripping blades (15, 16) into insulations (5a, 5c) of two conductors (4a, 4c) of the cable (1) and simultaneously causing a relative movement of the second pair (57) of stripping blades (17, 18) over the working stroke of the stripping tool (7) with a cutting of the second pair (57) of stripping blades (17, 18) into insulations (5b, 5d) of two other conductors (4b, 4d) of the cable (1)
c) the first pair (52) of the stripping blades (15, 16) and the second pair (57) of the stripping blades (17, 18) being moved in parallel planes (60, 61) over the working stroke.

## Revendications

1. Outil de dénudage (7) pour le dénudage simultané de plusieurs fils (4a, 4b, 4c, 4d) d'un câble à plusieurs fils (1) avec
a) une première paire (52) de lames de dénudage (15, 16),
aa) qui comprennent chacune deux moitiés d'arêtes de coupe (55a, 55b; 55c, 55d),
ab) qui forment, conjointement avec les moitiés d'arêtes de coupe (55a, 55b ; 55c, 55d) correspondantes entre elles, deux arêtes de coupes (77a, 77c) pour la découpe d'une isolation (5a, 5c) d'un fil (4a, 4c) du câble (1) et
ac) dont les moitiés d'arêtes de coupe (55a, 55b ; 55c, 55d) correspondantes entre elles sont déplacées sur une course de travail de l'outil de dénudage (7) pour la découpe de l'isolation (5) dans un premier plan (61) l'une par rapport à l'autre dans une première direction de fermeture (53) et
b) une deuxième paire (57) de lames de dénudage (17, 18),
ba) qui comprennent chacune deux moitiés d'arêtes de coupe (55e, 55f ; 55g, 55h),
bb) qui forment, conjointement avec les moitiés d'arêtes de coupe (55e, 55f ; 55g, 55h), deux arêtes de coupes (77b, 77d) pour réaliser une entaille dans l'isolation (5b, 5d) d'un autre fil (4b, 4d) du câble (1) et
bc) dont les moitiés d'arêtes de coupe (55e, 55f ; 55g, 55h) correspondantes entre elles sont déplacées sur une course de travail de l'outil de dénudage (7) pour réaliser une entaille dans l'isolation (5) dans un deuxième plan (60) différent du premier plan (61) l'un par rapport à l'autre dans une deuxième direction de fermeture (58) différente de la première direction de fermeture (53),
chacune des moitiés d'arêtes de coupes (55a, 55b ; 55c, 55d ; 55e, 55f ; 55g, 55h) étant conçue pour la réalisation d'une entaille dans une isolation (5) d'un fil (4) du câble à plusieurs fils (1).

2. Outil de dénudage (7) selon la revendication 1, **caractérisé en ce que**
a) le premier plan (61) et le deuxième plan (60) sont parallèles entre eux et sont disposés de manière directement adjacente entre eux,
b) les moitiés d'arêtes de coupe (55a, 55b ; 55c, 55d) des lames de dénudage (15, 16) de la première paire (52) sont disposées sur le côté, orienté vers les lames de dénudage (17, 18) de la deuxième paire (57), des lames de dénudage (15, 16) de la première (52) et
c) moitiés d'arêtes de coupe (55e, 55f ; 55g, 55h) des lames de dénudage (17, 18) de la deuxième paire (57) sont disposées sur le côté, orientée vers les lames de dénudage (15, 16) de la première (52), des lames de dénudage (17, 18) de la deuxième paire (57).

3. Outil de dénudage (7) selon l'une des revendications précédentes, **caractérisé en ce qu'**au moins une lame de dénudage (16) comprend un évidement ouvert sur le bord (56b), à travers lequel un fil (4d) non traité par cette lame de dénudage (16) peut passer.

4. Outil de dénudage (7) selon l'une des revendications précédentes, **caractérisé en ce que**
a) l'outil de dénudage (7) comprend un élément d'actionnement qui est déplacé sur la course de travail de l'outil de dénudage (7) et
b) les lames de dénudage (15, 16, 17, 18) comprennent des contre-surfaces d'actionnement (47 ; 70) qui s'appuient contre des surfaces d'actionnement (48 ; 69) de l'élément d'actionnement,
c) l'élément d'actionnement étant déplacé par rapport à une tête d'outil (13) sur la course de travail dans une direction d'actionnement et l'élément d'actionnement forme des surfaces d'actionnement (48 ; 69) inclinées par rapport à la direction d'actionnement.

5. Outil de dénudage (7) selon la revendication 4, **caractérisé en ce que** l'élément d'actionnement comprend une bague d'actionnement (29) et la direction d'actionnement est une direction circonférentielle (44) de la bague d'actionnement (29), dans laquelle la bague d'actionnement (29) est mise en rotation, les surfaces d'actionnement (48) étant inclinées par rapport à la direction circonférentielle (44).

6. Outil de dénudage (7) selon la revendication 4, **caractérisé en ce que** l'élément d'actionnement comprend une cale d'actionnement (63) et la direction d'actionnement est une direction de déplacement (78) de la cale d'actionnement (63), une surface de cale (64) de la cale d'actionnement (63), qui forme une surface d'actionnement, étant inclinée par rapport à la direction de déplacement (78).

7. Outil de dénudage (7) selon l'une des revendications précédentes, **caractérisé en ce que** des logements (21, 22) pour au moins deux fils (4) d'un câble (1) sont présents.

8. Outil de dénudage (7) selon la revendication 7, **caractérisé en ce que** les logements (21, 22) comprennent des butées (36) pour définition de la profondeur d'insertion des fils (4).

9. Outil de dénudage (7) selon l'une des revendications précédentes, **caractérisé en ce qu'**un éjecteur (31) est présent, par l'intermédiaire duquel au moins une extrémité, sectionnée avec l'outil de dénudage (7) sur la course de travail, d'une isolation (5), peut être éjectée hors de l'outil de dénudage (7).

10. Outil de dénudage (7) selon la revendication 9, en référence à la revendication 8, **caractérisé en ce que** l'éjecteur (31) déplace, pour l'éjection d'au moins une extrémité, sectionnée avec l'outil de dénudage (7) sur la course de travail, d'une isolation (5), au moins une butée (36) pour la prédétermination de la profondeur d'insertion des fils (4).

11. Outil de dénudage (7) selon l'une des revendications précédentes, **caractérisé en ce que** les paires (52, 57) des lames de dénudage (15, 16, 17, 18) comprennent des arêtes de coupe (77a, 77b, 77c, 77d) non alignées entre elles dans la position de fermeture.

12. Outil de dénudage (7) selon l'une des revendications précédentes, **caractérisé en ce que** les lames de dénudage (15)
a) comprennent une contre-surface d'actionnement (47) et/ou
b) une surface d'appui (45) pour un pied d'un ressort de rappel (30).

13. Procédé de dénudage simultané de plusieurs fils (4a, 4b, 4c, 4d) d'un câble (1) avec au moins quatre fils (4) munis d'isolations (5) avec un outil de dénudage (7) selon l'une des revendications 1 à 12, avec les étapes suivantes :
a) insertion d'au moins quatre fils (4) dans au moins un logement (21, 22) de l'outil de dénudage (7),
b) déplacement relatif de la première paire (52) de lames de dénudage (15, 16) sur une course de travail de l'outil de dénudage (7) avec une entaille de la première paire (52) de lames de dénudage (15, 16) dans des isolations (5a, 5c) de deux fils (4a, 4c) du câble (1) et déplacement relatif simultané de la deuxième paire (57) de lames de dénudage (17, 18) sur la course de travail de l'outil de dénudage (7) avec une entaille de la deuxième paire (57) des lames de dénudage (17, 18) dans des isolations (5b, 5d) de deux autres fils (4b, 4d) du câble (1),
c) la première paire (52) de lames de dénudage (15, 16) et la deuxième paire (57) de lames de dénudage (17, 18) étant déplacées sur la course de travail dans des plans parallèles (60, 61).
